# EUROPEAN PATENT APPLICATION

(11) **EP 4 715 517 A1**
(43) Date of publication of application: **25.03.2026**
(21) Application number: 24832230.7
(22) Date of filing: 07.05.2024
(51) Int. Cl.: G06F 1/16, C09J 7/00

(54) **ELECTRONIC DEVICE COMPRISING DISPLAY**

(30) Priority: 26.06.2023 KR 20230081973; 08.08.2023 KR 20230103822
(71) Applicant: Samsung Electronics Co., Ltd., Suwon-si, Gyeonggi-do 16677 (KR)
(72) Inventor: RYU, Bummoo, Suwon-si Gyeonggi-do 16677 (KR); KIM, Seonghoon, Suwon-si Gyeonggi-do 16677 (KR); PARK, Soonik, Suwon-si Gyeonggi-do 16677 (KR); YOON, Chungki, Suwon-si Gyeonggi-do 16677 (KR); JEON, Heuisoo, Suwon-si Gyeonggi-do 16677 (KR); JUNG, Bowon, Suwon-si Gyeonggi-do 16677 (KR); CHOUNG, Taedoo, Suwon-si Gyeonggi-do 16677 (KR); JUNG, Hunjo, Suwon-si Gyeonggi-do 16677 (KR); CHOI, Sungdae, Suwon-si Gyeonggi-do 16677 (KR); PARK, Chaebin, Suwon-si Gyeonggi-do 16677 (KR); KIM, Kwangtai, Suwon-si Gyeonggi-do 16677 (KR); YEOM, Donghyun, Suwon-si Gyeonggi-do 16677 (KR)
(74) Representative: Gulde & Partner
(86) International application number: PCT/KR2024/006098
(87) International publication number: WO 2025/005446

(57) **Abstract**

An electronic device is provided. According to an embodiment, the electronic device comprises: a display including a first planar portion, a second planar portion which is spaced apart from the first planar portion, and a folding portion which connects the first planar portion to the second planar portion and can be folded; a plate including a first portion which is attached to the first planar portion, and a second portion which is spaced apart from the first portion and attached to the second planar portion; a plurality of adhesive members including a first adhesive member which is interposed between the first planar portion and the first portion, a second adhesive member which is interposed between the second planar portion and the second portion, and a third adhesive member which is disconnected from the first adhesive member and the second adhesive member; and a first reinforcement member which is attached to the folding portion by the third adhesive member.

## Description

### [Technical Field]

Various embodiments of the present disclosure relate to an electronic device including a display.

### [Background Art]

In order to change a size of a display area that is visible from the outside, a shape of a display may be changed according to a state of an electronic device. For example, the display of the electronic device may be referred to as a deformable flexible display. In order to protect the deformable display, the electronic device may include a structure for protecting the display.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device is provided. According to an embodiment, the electronic device may comprise a display including a first planar portion, a second planar portion spaced apart from the first planar portion, and a folding portion connecting the first planar portion to the second planar portion and foldable based on a folding axis. According to an embodiment, the electronic device may comprise a plate supporting the display and including a first portion attached to the first planar portion and a second portion spaced apart from the first portion and attached to the second planar portion. According to an embodiment, the electronic device may comprise a plurality of adhesive members including a first adhesive member interposed between the first planar portion and the first portion, a second adhesive member interposed between the second planar portion and the second portion, and a third adhesive member disconnected from the first adhesive member and the second adhesive member and disposed between the first adhesive member and the second adhesive member. According to an embodiment, the electronic device may comprise a first reinforcing member attached to the folding portion by the third adhesive member to reduce an impact transmitted to the folding portion and having a higher rigidity than a rigidity of each of the plurality of adhesive members.

An electronic device is provided. According to an embodiment, the electronic device may comprise a display including a first planar portion, a second planar portion spaced apart from the first planar portion, and a folding portion connecting the first planar portion to the second planar portion and deformable. According to an embodiment, the electronic device may comprise a plate supporting the display and including a first portion attached to the first planar portion and a second portion disconnected from the first portion and attached to the second planar portion. According to an embodiment, the electronic device may comprise a plurality of adhesive members including a first adhesive member interposed between the first planar portion and the first portion, and a second adhesive member interposed between the second planar portion and the second portion. According to an embodiment, the electronic device may comprise a first reinforcing member supporting the folding portion to reduce an impact transmitted to the folding portion, attached to at least one of the first portion and the second portion, and spaced apart from the first adhesive member and the second adhesive member.

### [Description of the Drawings]

FIG. 1 is a block diagram of an electronic device in a network environment according to various embodiments.
FIG. 2A illustrates an example of an unfolding state of an exemplary electronic device according to an embodiment.
FIG. 2B illustrates an example of a folding state of an exemplary electronic device according to an embodiment.
FIG. 2C is an exploded view of an exemplary electronic device according to an embodiment.
FIG. 2D illustrates an exemplary electronic device according to an embodiment.
FIG. 3A is a top view illustrating a case in which an exemplary electronic device is in an unfolding state according to an embodiment.
FIG. 3B is a cross-sectional view illustrating an example in which an exemplary electronic device is cut along line A-A' of FIG. 3A according to an embodiment.
FIG. 3C is a cross-sectional view illustrating a case in which an exemplary electronic device is in a folding state according to an embodiment.
FIG. 4 is a cross-sectional view illustrating a case in which an exemplary electronic device is in an unfolding state according to an embodiment.
FIG. 5 is a cross-sectional view indicating an exemplary plate and a first reinforcing member according to an embodiment.
FIG. 6A is a top view illustrating a case in which an exemplary electronic device is in an unfolding state according to an embodiment.
FIG. 6B is a cross-sectional view illustrating an example in which an exemplary electronic device is cut along line B-B' of FIG. 6A according to an embodiment.
FIG. 6C is a cross-sectional view illustrating an example in which an exemplary electronic device is cut along line C-C' of FIG. 6A according to an embodiment.
FIG. 7 is a cross-sectional view illustrating a case in which an exemplary electronic device is in an unfolding state according to an embodiment.
FIG. 8A is a cross-sectional view illustrating a case in which an exemplary electronic device is in an unfolding state according to an embodiment.
FIG. 8B is a cross-sectional view illustrating a case in which an exemplary electronic device is in a folding state according to an embodiment.
FIG. 9A is a cross-sectional view illustrating a case in which an exemplary electronic device is in an unfolding state according to an embodiment.
FIG. 9B is a cross-sectional view illustrating a case in which an exemplary electronic device is in a folding state according to an embodiment.
FIG. 10 is a cross-sectional view illustrating a case in which an exemplary electronic device is in an unfolding state according to an embodiment.
FIG. 11 is a cross-sectional view illustrating a case in which an exemplary electronic device is in an unfolding state according to an embodiment.
FIG. 12A illustrates an exemplary electronic device according to an embodiment.
FIG. 12B is a cross-sectional view illustrating an example in which an exemplary electronic device is cut along line D-D' of FIG. 12A according to an embodiment.
FIG. 13A illustrates an example of an unfolding state of an electronic device according to an embodiment.
FIG. 13B illustrates an example of a fully folding state of an electronic device according to an embodiment.

### [Mode for Invention]

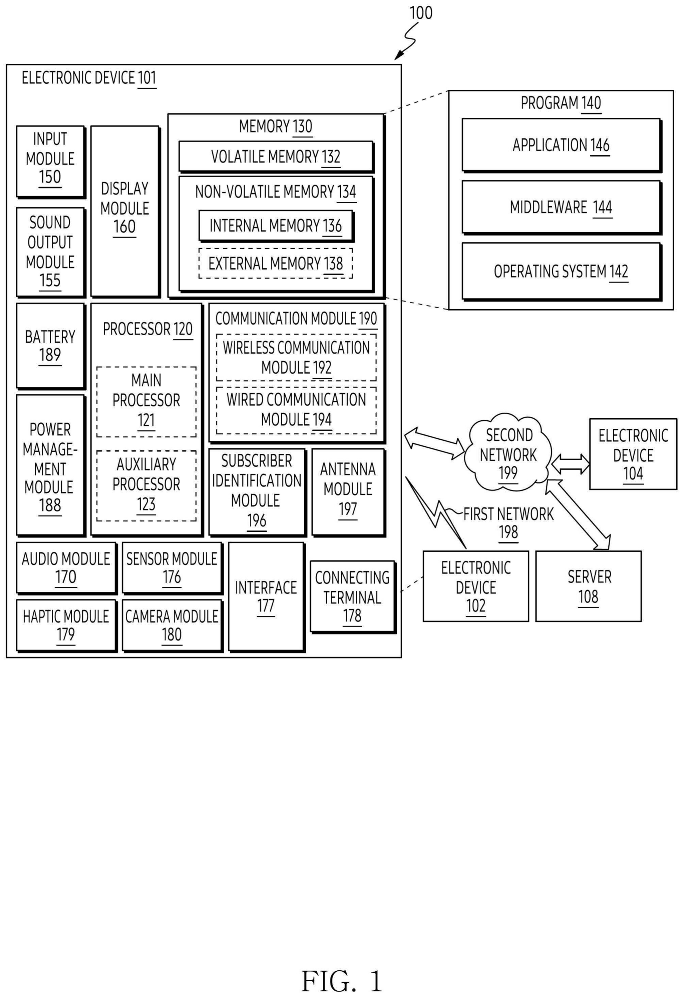

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

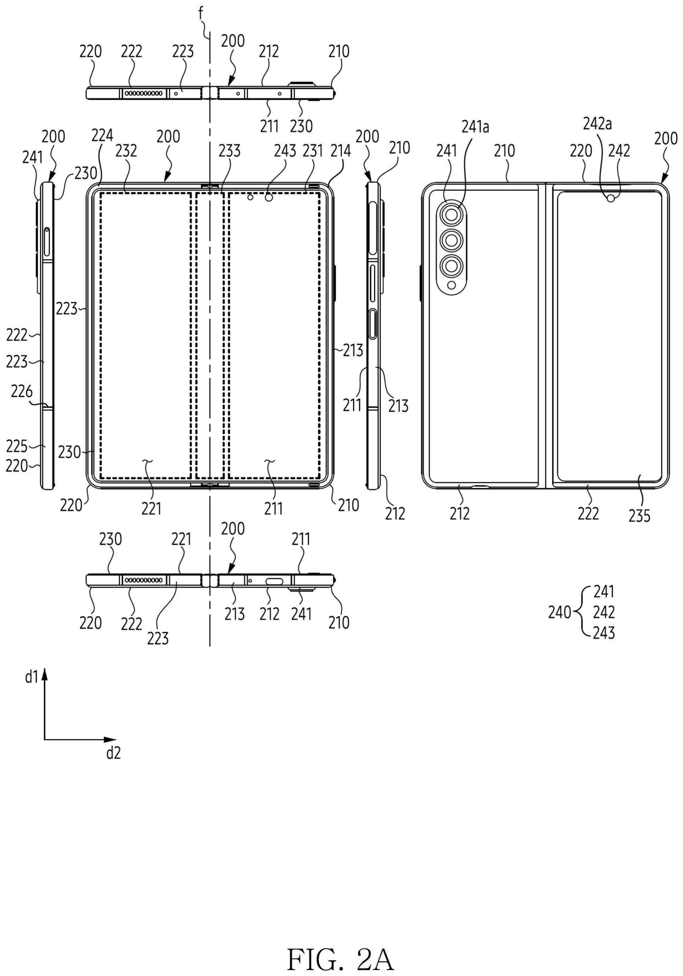

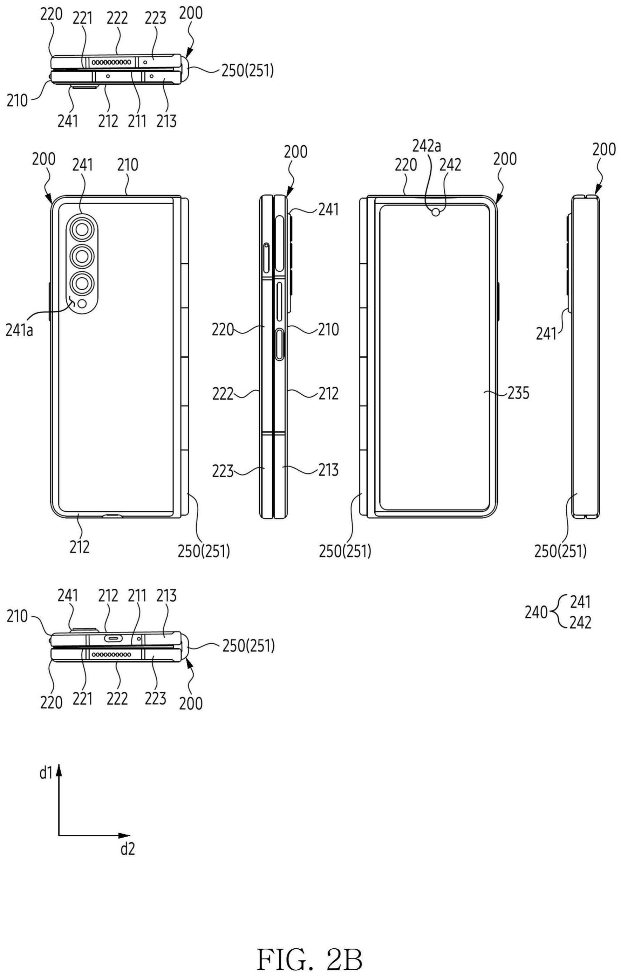

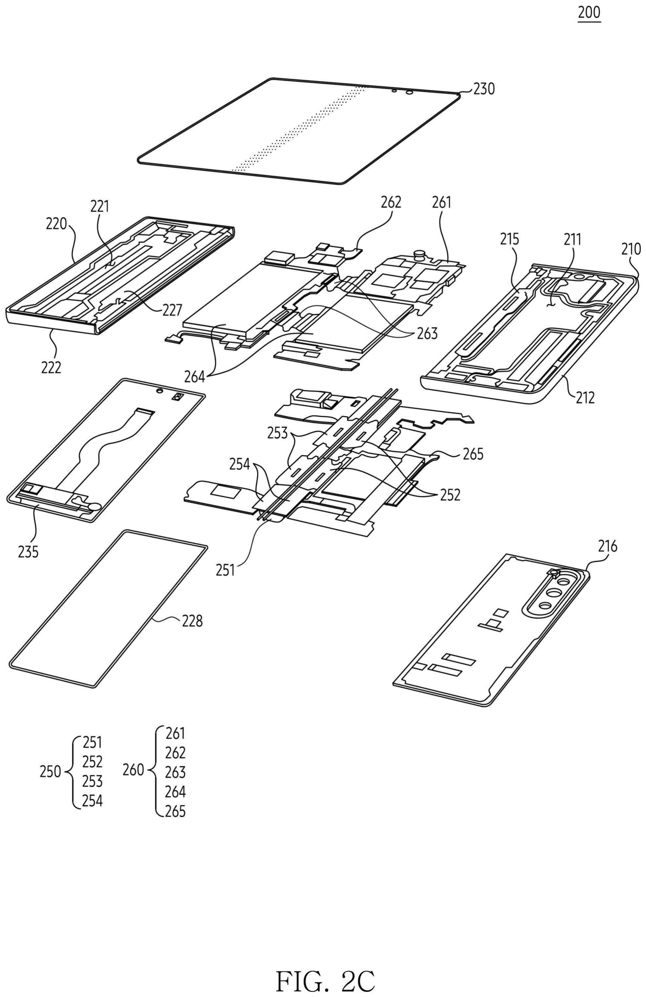

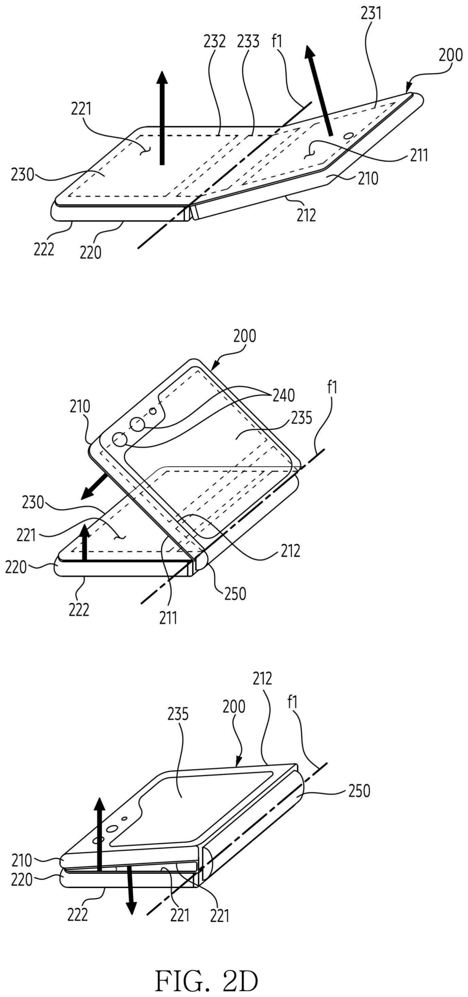

FIG. 2A illustrates an example of an unfolding state of an electronic device according to an embodiment, FIG. 2B illustrates an example of a folding state of an electronic device according to an embodiment, FIG. 2C is an exploded view of an electronic device according to an embodiment, and FIG. 2D illustrates an exemplary electronic device according to an embodiment.

Referring to FIGS. 2A, 2B, 2C, and 2D, an electronic device 200 (e.g., the electronic device 101 of FIG. 1) may include a first housing 210, a second housing 220, and a display 230, at least one camera 240 (e.g., the camera module 180 of FIG. 1), a hinge structure 250, and/or at least one electronic component 260.

The first housing 210 and the second housing 220 may form at least a portion of an outer surface of the electronic device 200 that may be gripped by a user. At least a portion of the outer surface of the electronic device 200 defined by the first housing 210 and the second housing 220 may be in contact with a portion of a user's body when the electronic device 200 is used by the user. According to an embodiment, the first housing 210 may include a first surface 211, a second surface 212 facing the first surface 211 and spaced apart from the first surface 211, and a first lateral surface 213 surrounding at least a portion of the first surface 211 and the second surface 212. The first lateral surface 213 may connect a periphery of the first surface 211 and a periphery of the second surface 212. The first surface 211, the second surface 212, and the first lateral surface 213 may define an inner space of the first housing 210. According to an embodiment, the first housing 210 may provide a space formed by the first surface 211, the second surface 212, and the first lateral surface 213 as a space for disposing components of the electronic device 200.

According to an embodiment, the second housing 220 may include a third surface 221, a fourth surface 222 facing the third surface 221 and spaced apart from the third surface 221, and a second lateral surface 223 surrounding at least a portion of the third surface 221 and the fourth surface 222. The second lateral surface 223 may connect a periphery of the third surface 221 and a periphery of the fourth surface 222. The third surface 221, the fourth surface 222, and the second lateral surface 223 may define an inner space of the second housing 220. According to an embodiment, the second housing 220 may provide a space formed by the third surface 221, the fourth surface 222, and the second lateral surface 223 surrounding at least a portion of the third surface 221 and the fourth surface 222 as a space for mounting components of the electronic device 101. According to an embodiment, the second housing 220 may be coupled to the first housing 210 to be rotatable with respect to the first housing 210.

According to an embodiment, each of the first housing 210 and the second housing 220 may include each of a first protective member 214 and a second protective member 224. The first protective member 214 and the second protective member 224 may be disposed on the first surface 211 and the third surface 221 along a periphery of the display 230. According to an embodiment, the first protective member 214 and the second protective member 224 may prevent a foreign substance (e.g., dust or moisture) from introducing through a gap between the display 230, the first housing 210 and the second housing 220. For example, the first protective member 214 may surround a periphery of a first display area 231 of the display 230, and the second protective member 224 may surround a periphery of a second display area 232 of the display 230. The first protective member 214 may be formed by being attached to the first lateral surface 213 of the first housing 210, or may be integrally formed with the first lateral surface 213. The second protective member 224 may be formed by being attached to the second lateral surface 223 of the second housing 220, or may be integrally formed with the second lateral surface 223.

According to an embodiment, the first lateral surface 213 and the second lateral surface 223 may include a conductive material, a non-conductive material, or a combination thereof. For example, the second lateral surface 223 may include at least one conductive member 225 and at least one non-conductive member 226. The at least one conductive member 225 may include a plurality of conductive members spaced apart from each other. The at least one non-conductive member 226 may be disposed between the plurality of conductive members. The plurality of conductive members may be disconnected from each other by the at least one non-conductive member 226 disposed between the plurality of conductive members. According to an embodiment, the plurality of conductive members and a plurality of non-conductive members may form an antenna radiator together. The electronic device 200 may be capable of communicating with an external electronic device through the antenna radiator formed by the plurality of conductive members and the plurality of non-conductive members.

The display 230 may be configured to display visual information. According to an embodiment, the display 230 may be disposed on the first surface 211 of the first housing 210 and the third surface 221 of the second housing 220 across the hinge structure 250. For example, the display 230 may include the first display area 231 disposed on the first surface 211 of the first housing, the second display area 232 disposed on the third surface 221 of the second housing, and a third display area 233 disposed between the first display area 231 and the second display area 232. The first display area 231, the second display area 232, and the third display area 233 may form a front surface of the display 230. According to an embodiment, the display 230 may further include a sub-display panel 235 disposed in the fourth surface 222 of the second housing 220. For example, the display 230 may be referred to as a flexible display. According to an embodiment, the display 230 may include a window exposed toward the outside of the electronic device 200. The window may protect a surface of the display 230, and transfer the visual information provided by the display 230 to the outside of the electronic device 200 by including a substantially transparent material. For example, the window may include glass (e.g., UTG, ultra-thin glass) and/or polymer (e.g., PI, polyimide), but is not limited thereto.

The at least one camera 240 may be configured to obtain an image based on receiving light from a subject outside the electronic device 200. According to an embodiment, the at least one camera 240 may include first cameras 241, a second camera 242, and a third camera 243. The first cameras 241 may be disposed in the first housing 210. For example, the first cameras 241 may be disposed inside the first housing 210, and at least a portion of the first cameras 241 may be visible through the second surface 212 of the first housing 210. The first cameras 241 may be supported by a bracket (not illustrated) in the first housing 210. The first housing 210 may include at least one opening 241a overlapping the first cameras 241 when the second surface 212 is viewed from above. The first cameras 241 may obtain an image based on receiving light from the outside of the electronic device 200 through the at least one opening 241a.

According to an embodiment, the second camera 242 may be disposed in the second housing 220. For example, the second camera 242 may be disposed inside the second housing 220 and may be visible through the sub-display panel 235. The second housing 220 may include at least one opening 242a overlapping the second camera 242 when the fourth surface 222 is viewed from above. The second camera 242 may obtain an image based on receiving light from the outside of the electronic device 200 through the at least one opening 242a.

According to an embodiment, the third camera 243 may be disposed in the first housing 210. For example, the third camera 243 may be disposed inside the first housing 210, and at least a portion of the third camera 243 may be visible through the first surface 211 of the first housing 210. For another example, the third camera 243 may be disposed inside the first housing 210 and at least a portion of the third camera 243 may be visible through the first display area 231 of the display 230. The first display area 231 of the display 230 may include at least one opening (not illustrated) overlapping the third camera 243 when the display 230 is viewed from above. The third camera 243 may obtain an image based on receiving light from the outside of the display 230 through the at least one opening.

According to an embodiment, the second camera 242 and the third camera 243 may be disposed under the display 230 (e.g., in a direction toward the inside of the first housing 210 or the inside of the second housing 220). For example, the second camera 242 and the third camera 243 may be under display cameras (UDCs). In a case that the second camera 242 and the third camera 243 are the under display cameras, an area of the display 230 corresponding to a position of each of the second camera 242 and the third camera 243 may not be an inactive area. For example, in a case that the second camera 242 and the third camera 243 are the under display cameras, the area of the display 230 corresponding to the position of each of the second camera 242 and the third camera 243 may have a pixel density lower than a pixel density of another area of the display 230. The inactive area of the display 230 may mean an area of the display 230 that does not include a pixel or does not emit light to the outside of the electronic device 200. For another example, the second camera 242 and the third camera 243 may be punch hole cameras. In a case that the second camera 242 and the third camera 243 are the punch hole cameras, an area of the display 230 corresponding to the position of each of the second camera 242 and the third camera 243 may be the inactive area. For example, in a case that the second camera 242 and the third camera 243 are the punch hole cameras, the area of the display 230 corresponding to the position of each of the second camera 242 and the third camera 243 may include an opening that does not include a pixel.

According to an embodiment, the hinge structure 250 may rotatably connect the first housing 210 and the second housing 220. The hinge structure 250 may be disposed between the first housing 210 and the second housing 220 of the electronic device 101 such that the electronic device 200 may be bent, curved, or folded. For example, the hinge structure 250 may be disposed between a portion of the first lateral surface 213 and a portion of the second lateral surface 223 facing each other. The hinge structure 250 may change the electronic device 200 into an unfolding state in which directions toward which the first surface 211 of the first housing 210 and the third surface 221 of the second housing 220 face is substantially the same as each other or into a folding state in which the first surface 211 and the third surface 221 face each other. When the electronic device 200 is in the folding state, the first housing 210 and the second housing 220 may be superimposed or overlapped by facing each other.

According to an embodiment, when the electronic device 200 is in the folding state, a direction toward which the first surface 211 faces and a direction toward which the third surface 221 faces may be different from each other. For example, when the electronic device 200 is in the folding state, the direction toward which the first surface 211 faces and the direction toward which the third surface 221 faces may be opposite to each other. For another example, when the electronic device 200 is in the folding state, the direction toward which the first surface 211 faces and the direction toward which the third surface 221 faces may be inclined with respect to each other. In a case that the direction toward which the first surface 211 faces is inclined with respect to the direction toward which the third surface 221 faces, the first housing 210 may be inclined with respect to the second housing 220.

According to an embodiment, the electronic device 200 may be foldable based on a folding axis f. The folding axis f may mean a virtual line extended through a hinge cover 251 in a direction (e.g., d1 of FIGS. 2A and 2B) substantially parallel to a longitudinal direction of the electronic device 200, but is not limited thereto. For example, the folding axis f may be a virtual line extending in a direction (e.g., d2 in FIGS. 2A and 2B) substantially perpendicular to the longitudinal direction of the electronic device 200. In a case that the folding axis f extends in the direction substantially perpendicular to the longitudinal direction of the electronic device 200, the hinge structure 250 may connect the first housing 210 and the second housing 220, by extending in the direction parallel to the folding axis f. The first housing 210 and the second housing 220 may be rotatable by the hinge structure 250 extending in the direction substantially perpendicular to the longitudinal direction of the electronic device 200.

According to an embodiment, the hinge structure 250 may include the hinge cover 251, a first hinge plate 252, a second hinge plate 253, and a hinge module 254. The hinge cover 251 may surround internal components of the hinge structure 250 and form an outer surface of the hinge structure 250. According to an embodiment, when the electronic device 200 is in the folding state, at least a portion of the hinge cover 251 surrounding the hinge structure 250 may be exposed to the outside of the electronic device 200 through a space between the first housing 210 and the second housing 220. According to an embodiment, when the electronic device 200 is in the unfolding state, the hinge cover 251 may not be exposed to the outside of the electronic device 200, by being covered by the first housing 210 and the second housing 220.

According to an embodiment, the first hinge plate 252 and the second hinge plate 253 may rotatably connect the first housing 210 and the second housing 220 by being respectively coupled to the first housing 210 and the second housing 220. For example, the first hinge plate 252 may be coupled to a first front bracket 215 of the first housing 210 and the second hinge plate 253 may be coupled to a second front bracket 227 of the second housing 220. As the first hinge plate 252 and the second hinge plate 253 are respectively coupled to the first front bracket 215 and the second front bracket 227, the first housing 210 and the second housing 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 based on the folding axis f, by including gears that may be engaged with each other and rotatable. According to an embodiment, the hinge module 254 may be plural. For example, the plurality of hinge modules 254 may be disposed respectively by being spaced apart from each other at both ends of the first hinge plate 252 and the second hinge plate 253. However, it is not limited thereto. For example, the hinge structure 250 may further include a third hinge plate distinguished from the first hinge plate 252 and the second hinge plate 253. The third hinge plate may support the display 230. For example, a position of the third hinge plate may be fixed while the first hinge plate 252 and the second hinge plate 253 move. For example, the third hinge plate may be disposed between the first hinge plate 252 and the second hinge plate 253. In a case that the hinge structure 250 includes the third hinge plate, an interval between the first hinge plate 252 and the second hinge plate 253 may be larger than a size of the third hinge plate. For example, in a case that the hinge structure 250 includes the third hinge plate, the interval between the first hinge plate 252 and the second hinge plate 253, a size of the third hinge plate, a size of a gap between the first hinge plate 252 and the third hinge plate, and a size of a gap between the second hinge plate 253 and the third hinge plate may be substantially the same.

According to an embodiment, the first housing 210 may include the first front bracket 215 and a first rear bracket 216, and the second housing 220 may include the second front bracket 227 and a second rear bracket 228. The first front bracket 215 and the first rear bracket 216 may support components of the electronic device 200. The first front bracket 215 may define the first housing 210 by being coupled to the first rear bracket 216. The first rear bracket 216 may define a portion of an outer surface of the first housing 210. The second front bracket 227 and the second rear bracket 228 may support components of the electronic device 200. The second front bracket 227 may define the second housing 220 by being coupled to the second rear bracket 228. The second rear bracket 228 may define a portion of an outer surface of the second housing 220. For example, the display 230 may be disposed in a surface of the first front bracket 215 and a surface of the second front bracket 227. The first rear bracket 216 may be disposed in another surface of the first front bracket 215 opposite to the surface of the first front bracket 215. The second rear bracket 228 may be disposed in another surface of the second front bracket 227 opposite to the surface of the second front bracket 227. The sub-display panel 235 may be disposed between the second front bracket 227 and the second rear bracket 228.

According to an embodiment, a portion of the first front bracket 215 may be surrounded by the first lateral surface 213, and a portion of the second front bracket 227 may be surrounded by the second lateral surface 223. For example, the first front bracket 215 may be integrally formed with the first lateral surface 213, and the second front bracket 227 may be integrally formed with the second lateral surface 223. For another example, the first front bracket 215 may be formed separately from the first lateral surface 213, and the second front bracket 227 may be formed separately from the second lateral surface 223.

The at least one electronic component 260 may implement various functions for providing to the user. According to an embodiment, the at least one electronic component 260 may include a first printed circuit board 261, a second printed circuit board 262, a flexible printed circuit board 263, a battery 264 (e.g., the battery 189 of FIG. 1), and/or an antenna 265 (e.g., the antenna module 197 of FIG. 1). Each of the first printed circuit board 261 and the second printed circuit board 262 may form an electronical connection of components in the electronic device 200. For example, components (e.g., the processor 120 of FIG. 1) for implementing an overall function of the electronic device 200 may be disposed in the first printed circuit board 261, and electronic components for implementing a partial function of the first printed circuit board 261 may be disposed in the second printed circuit board 262. For another example, components for an operation of the sub-display panel 235 disposed in the fourth surface 222 may be disposed in the second printed circuit board 262.

According to an embodiment, the first printed circuit board 261 may be disposed in the first housing 210. For example, the first printed circuit board 261 may be disposed on a surface of the first front bracket 215. According to an embodiment, the second printed circuit board 262 may be disposed in the second housing 220. For example, the second printed circuit board 262 may be spaced apart from the first printed circuit board 261 and disposed on a surface of the second front bracket 227. The flexible printed circuit board 263 may connect the first printed circuit board 261 and the second printed circuit board 262. For example, the flexible printed circuit board 263 may extend from the first printed circuit board 261 to the second printed circuit board 262.

The battery 264 may be a device for supplying power to at least one component of the electronic device 200, and for example, may include a non-rechargeable primary battery, or a rechargeable secondary battery, or a fuel cell. At least a portion of the battery 264 may be disposed substantially on the same plane as the first printed circuit board 261 or the second printed circuit board 262.

The antenna 265 may be configured to receive power or a signal from the outside of the electronic device 200. According to an embodiment, the antenna 265 may be disposed between the first rear bracket 216 and the battery 264. For example, the antenna 265 may include a near field communication (NFC) antenna, an antenna module, and/or a magnetic secure transmission (MST) antenna. For example, the antenna 265 may perform short-range communication with an external device, or wirelessly transmit and receive power required for charging.

Meanwhile, referring to FIG. 2D, according to an embodiment, the electronic device 200 may have a shape in which a longitudinal direction of the electronic device 200 is perpendicular to a folding axis f1. A longitudinal direction of a component may indicate the longest extending direction when the electronic device 200 has a shape extending along one or more directions. For example, the folding axis f1 may indicate a virtual line extending along a direction perpendicular to a direction from the first housing 210 toward the second housing 220.

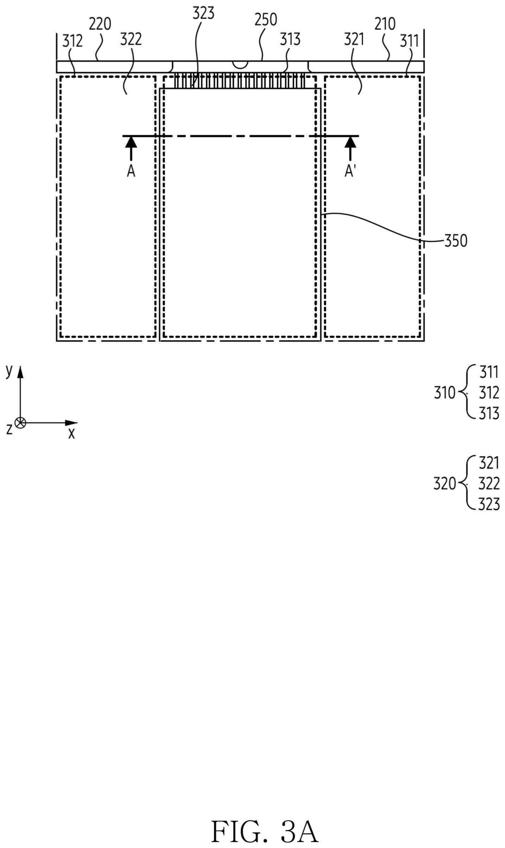

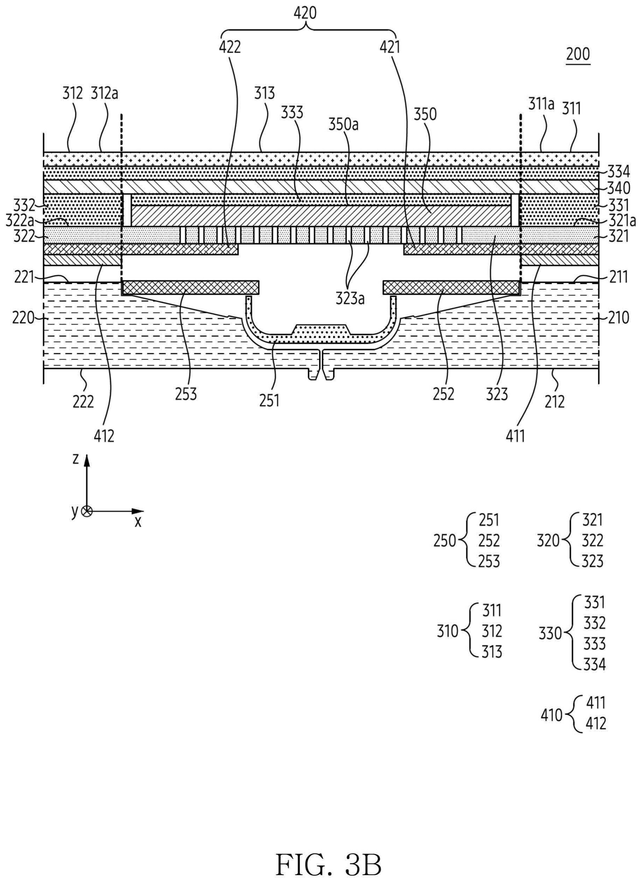

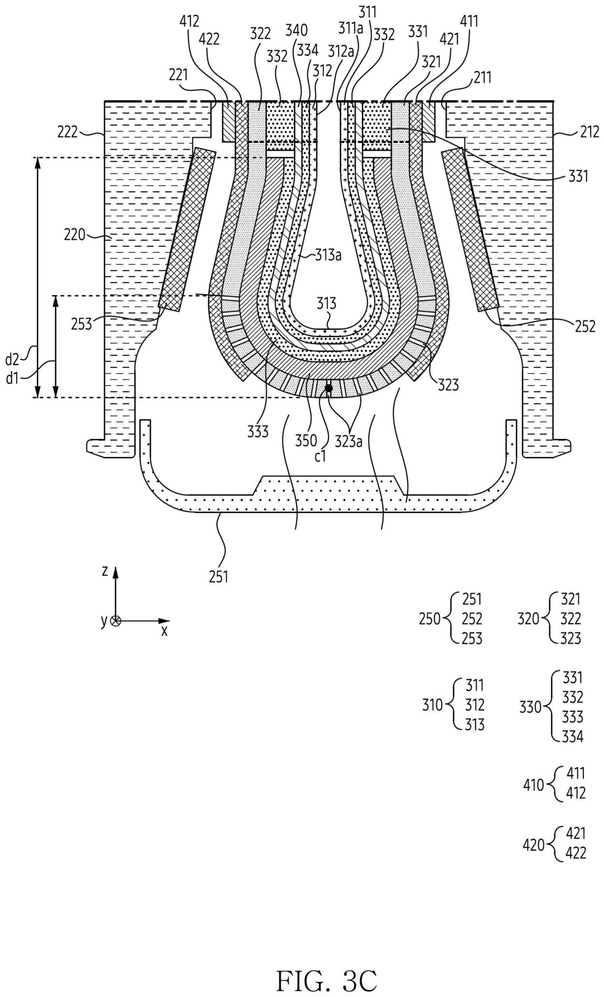

FIG. 3A is a top view of an exemplary electronic device according to an embodiment, FIG. 3B is a cross-sectional view illustrating an example in which an exemplary electronic device cut along line A-A' of FIG. 3A according to an embodiment, and FIG. 3C is a cross-sectional view illustrating a case in which an exemplary electronic device is in a folding state according to an embodiment.

Referring to FIGS. 3A, 3B, and 3C, according to an embodiment, an electronic device 200 may include a first housing 210, a second housing 220, a hinge structure 250, a display 310 (e.g., the display 230 of FIGS. 2A, 2B, and 2C), a first plate 320, a plurality of adhesive members 330, a protective layer 340, a first reinforcing member 350, a support plate 410, and/or an electromagnetic induction panel 420.

FIG. 3A illustrates the electronic device 200 in a state in which the plurality of adhesive members 330 and the protective layer 340 are omitted.

According to an embodiment, the first housing 210 may support a portion of various components of the electronic device 200. The first housing 210 may be movable with respect to the second housing 220. For example, the first housing 210 may be rotatable with respect to the second housing 220. According to an embodiment, the first housing 210 may include a first surface 211 and a second surface 212. The first surface 211 may face the display 310. The second surface 212 may be opposite to the first surface 211. For example, the second surface 212 may be exposed to the outside of the first housing 210, but is not limited thereto.

According to an embodiment, the second housing 220 may support another portion of various components of the electronic device 200. The second housing 220 may be movable with respect to the first housing 210. For example, the second housing 220 may be rotatable with respect to the first housing 210. According to an embodiment, the second housing 220 may include a third surface 221 and a fourth surface 222. The third surface 221 may face the display 310. The fourth surface 222 may be opposite to the third surface 221. For example, the fourth surface 222 may be exposed to the outside of the second housing 220, but is not limited thereto.

According to an embodiment, the hinge structure 250 may movably connect the first housing 210 and the second housing 220. By the hinge structure 250, a state of the electronic device 200 may be changed from an unfolding state to a folding state or from the folding state to the unfolding state. In the unfolding state of the electronic device 200, a direction (e.g., a +z direction) toward which the first surface 211 of the first housing 210 faces and a direction (e.g., a +z direction) toward which the third surface 221 of the second housing 220 faces may be substantially the same as each other. By movement of the second housing 220 with respect to the first housing 210, the state of the electronic device 200 may be changed from the unfolding state to the folding state. For example, as the first housing 210 rotates 90° along a first rotation direction (e.g., counterclockwise in FIGS. 3B and 3C) and the second housing 220 rotates 90° along a second rotation direction (e.g., clockwise in FIGS. 3B and 3C) opposite to the first rotation direction with respect to the hinge structure 250, the state of the electronic device 200 may change from the unfolding state to the folding state. In the folding state of the electronic device 200, a direction (e.g., a -x direction) toward which the first surface 211 of the first housing 210 faces may be opposite to a direction (e.g., a +x direction) toward which the third surface 221 of the second housing 220 faces. For example, in the folding state of the electronic device 200, the first surface 211 of the first housing 210 may face the third surface 221 of the second housing 220. However, it is not limited thereto. For example, the state of the electronic device 200 may include an intermediate state in which the direction toward which the first surface 211 of the first housing 210 faces is inclined with respect to the direction toward which the third surface 221 of the second housing 220 faces. The intermediate state may be referred to as a flex mode. By the movement of the second housing 220 with respect to the first housing 210, the state of the electronic device 200 may change from the folding state to the unfolding state. For example, as the first housing 210 rotates 90 ° along the second rotation direction (e.g., clockwise in FIGS. 3B and 3C) and the second housing 220 rotates 90 ° along the first rotation direction (e.g., counterclockwise in FIGS. 3B and 3C) with respect to the hinge structure 250, the state of the electronic device 200 may change from the unfolding state to the folding state. According to an embodiment, the hinge structure 250 may include a hinge cover 251, the first hinge plate 252, and/or a second hinge plate 253.

According to an embodiment, the hinge cover 251 may protect components of the hinge structure 250. The hinge cover 251 may be exposed to the outside of the electronic device 200 or may be covered by the first housing 210 and the second housing 220 according to a change in the state of the electronic device 200. For example, within the unfolding state of the electronic device 200, the hinge cover 251 may be covered by the first housing 210 and the second housing 220. For example, within the folding state of the electronic device 200, the hinge cover 251 may be exposed to the outside of the electronic device 200.

According to an embodiment, the first hinge plate 252 may fold or unfold the display 310 while the state of the electronic device 200 is changed. The first hinge plate 252 may be movable with respect to the hinge cover 251. For example, the first hinge plate 252 may be rotatable with respect to the hinge cover 251. The first hinge plate 252 may rotate while the first housing 210 rotates. For example, a rotation direction of the first hinge plate 252 may be substantially the same as a rotation direction of the first housing 210. According to an embodiment, a rotation angle of the first hinge plate 252 with respect to the hinge cover 251 while the state of the electronic device 200 is changed from the unfolding state to the folding state may be different from a rotation angle of the first housing 210 with respect to the hinge cover 251 while the state of the electronic device 200 is changed from the unfolding state to the folding state. For example, the rotation angle of the first hinge plate 252 with respect to the hinge cover 251 while the state of the electronic device 200 is changed from the unfolding state to the folding state may be greater than the rotation angle of the first housing 210 with respect to the hinge cover 251 while the state of the electronic device 200 is changed from the unfolding state to the folding state. For example, the first hinge plate 252 rotates 100 ° with respect to the hinge cover 251 while the state of the electronic device 200 is changed from the unfolding state to the folding state, and the first housing 210 may rotate 90° with respect to the hinge cover 251 while the state of the electronic device 200 is changed from the unfolding state to the folding state, but is not limited thereto. Within the folding state of the electronic device 200, the first hinge plate 252 may be positioned to be inclined with respect to the first surface 211 of the first housing 210. However, it is not limited thereto. The rotation angle of the first hinge plate 252 with respect to the hinge cover 251 while the state of the electronic device 200 is changed from the unfolding state to the folding state may be substantially the same as the rotation angle of the first housing 210 with respect to the hinge cover 251 while the state of the electronic device 200 is changed from the unfolding state to the folding state. For example, within the unfolding state of the electronic device 200, the first hinge plate 252 may also be positioned to be substantially parallel to the first surface 211 of the first housing 210.

According to an embodiment, the second hinge plate 253 may fold or unfold the display 310 while the state of the electronic device 200 is changed. The second hinge plate 253 may be movable with respect to the hinge cover 251. For example, the second hinge plate 253 may be rotatable with respect to the hinge cover 251. The second hinge plate 253 may rotate while the second housing 220 rotates. For example, a rotation direction of the second hinge plate 253 may be substantially the same as a rotation direction of the second housing 220. According to an embodiment, a rotation angle of the second hinge plate 253 with respect to the hinge cover 251 while the state of the electronic device 200 is changed from the unfolding state to the folding state may be different from a rotation angle of the second housing 220 with respect to the hinge cover 251 while the state of the electronic device 200 is changed from the unfolding state to the folding state. For example, the rotation angle of the second hinge plate 253 with respect to the hinge cover 251 while the state of the electronic device 200 is changed from the unfolding state to the folding state may be greater than the rotation angle of the second housing 220 with respect to the hinge cover 251 while the state of the electronic device 200 is changed from the unfolding state to the folding state. For example, the second hinge plate 253 rotates 100 ° with respect to the hinge cover 251 while the state of the electronic device 200 is changed from the unfolding state to the folding state, and the second housing 220 may rotate 90° with respect to the hinge cover 251 while the state of the electronic device 200 is changed from the unfolding state to the folding state, but is not limited thereto. Within the unfolding state of the electronic device 200, the second hinge plate 253 may be positioned to be substantially parallel to the third surface 221 of the second housing 220. Within the folding state of the electronic device 200, the second hinge plate 253 may be positioned to be inclined with respect to the third surface 221 of the second housing 220. However, it is not limited thereto. The rotation angle of the second hinge plate 253 with respect to the hinge cover 251 while the state of the electronic device 200 is changed from the unfolding state to the folding state may be substantially the same as the rotation angle of the second housing 220 with respect to the hinge cover 251 while the state of the electronic device 200 is changed from the unfolding state to the folding state.

According to an embodiment, the display 310 may be configured to provide visual content. The display 310 may be disposed on the first surface 211 of the first housing 210 and the third surface 221 of the second housing 220 across the hinge structure 250. The display 310 may be deformable by movement of the second housing 220 with respect to the first housing 210 and/or movement of the first housing 210 with respect to the second housing 220. For example, the display 310 may be foldable based on a folding axis f by the movement of the second housing 220 with respect to the first housing 210 and/or the movement of the first housing 210 with respect to the second housing 220. For example, the display 310 may be foldable by the movement of the second housing 220 with respect to the first housing 210 and/or the movement of the first housing 210 with respect to the second housing 220. According to an embodiment, the display 310 may include a first planar portion 311, a second planar portion 312, and a folding portion 313.

According to an embodiment, the first planar portion 311 may be disposed on the first housing 210. For example, the first planar portion 311 may be disposed over the first surface 211 of the first housing 210. For example, the first planar portion 311 may be faced away from the first surface 211 of the first housing 210. The first planar portion 311 may be planar. A shape of the first planar portion 311 may be maintained while the state of the electronic device 200 is changed. For example, the first planar portion 311 may have a shape substantially parallel to the first surface 211 of the first housing 210 within the folding state and/or the unfolding state of the electronic device 200.

According to an embodiment, the second planar portion 312 may be disposed on the second housing 220. For example, the second planar portion 312 may be disposed over the third surface 221 of the second housing 220. For example, the second planar portion 312 may be faced away from the third surface 221 of the second housing 220. The second planar portion 312 may be planar. A shape of the second planar portion 312 may be maintained while the state of the electronic device 200 is changed. For example, the second planar portion 312 may have a shape substantially parallel to the third surface 221 of the second housing 220 within the folding state and/or the unfolding state of the electronic device 200. According to an embodiment, the second planar portion 312 may be spaced apart from the first planar portion 311. For example, the second planar portion 312 may be connected to the first planar portion 311 by the folding portion 313.

According to an embodiment, the folding portion 313 may be disposed between the first planar portion 311 and the second planar portion 312. For example, the folding portion 313 may be connected from the first planar portion 311 to the second planar portion 312. The folding portion 313 may be disposed on the hinge structure 250. The folding portion 313 may be deformable. A shape of the folding portion 313 may be changed according to a change in the state of the electronic device 200. For example, the folding portion 313 may be foldable based on the folding axis f by the movement of the second housing 220 with respect to the first housing 210 and/or the movement of the first housing 210 with respect to the second housing 220. For example, the folding portion 313 may be foldable based on the folding axis f by the movement of the second planar portion 312 with respect to the first planar portion 311 and/or the movement of the first planar portion 311 with respect to the second planar portion 312. The folding portion 313 may be unfolded within the unfolding state of the electronic device 200. The folding portion 313 may be folded within the folding state of the electronic device 200. Within the unfolding state of the electronic device 200, the folding portion 313 may have a shape substantially parallel to the first planar portion 311 and the second planar portion 312. For example, within the unfolding state of the electronic device 200, the first planar portion 311, the second planar portion 312, and the folding portion 313 may define (or form) substantially one plane. Within the folding state of the electronic device 200, the folding portion 313 may have a shape different from shapes of the first planar portion 311 and the second planar portion 312. For example, within the folding state of the electronic device 200, the folding portion 313 may be bent to have a curvature. For example, the folding portion 313 may be referred to as a deformed portion.

According to an embodiment, within the unfolding state of the electronic device 200, a direction (e.g., a +z direction) toward which a surface 311a of the first planar portion 311 faces may be substantially the same as a direction (e.g., a +z direction) toward which a surface 312a of the second planar portion 312 faces. Within the folding state of the electronic device 200, a direction (e.g., a -x direction) toward which the surface 311a of the first planar portion 311 faces may be opposite to a direction (e.g., a +x direction) toward which the surface 312a of the second planar portion 312 faces. For example, within the folding state of the electronic device 200, the surface 311a of the first planar portion 311 may face the surface 312a of the second planar portion 312.

According to an embodiment, a portion 313a of the folding portion 313 may be inclined with respect to the first planar portion 311 and the second planar portion 312 within the folding state of the electronic device 200. For example, since a rotation angle range of the first hinge plate 252 with respect to the hinge cover 251 and a rotation angle range of the first housing 210 with respect to the hinge cover 251 are different, the portion 313a of the folding portion 313 may be positioned to be inclined with respect to the first surface 211 of the first housing 210 within the folding state of the electronic device 200. However, it is not limited thereto. For example, in a case that the rotation angle range of the first hinge plate 252 with respect to the hinge cover 251 and the rotation angle range of the first housing 210 with respect to the hinge cover 251 are the same, the portion 313a of the folding portion 313 may not be inclined with respect to the first planar portion 311 and the second planar portion 312 within the folding state of the electronic device 200.

According to an embodiment, the first plate 320 may support the display 310. The first plate 320 may protect the display 310 from an external force (or an impact) transmitted to the display 310. The first plate 320 may be formed of at least one of stainless steel and/or carbon fiber reinforced plastic (CFRP), but is not limited thereto. The first plate 320 may be disposed under the display 310. The first plate 320 may be disposed on the first surface 211 of the first housing 210 and the third surface 221 of the second housing 220 across the hinge structure 250. The first plate 320 may be deformed while the state of the electronic device 200 is changed. According to an embodiment, the first plate 320 may include a first portion 321, a second portion 322, and/or a third portion 323.

According to an embodiment, the first portion 321 may be positioned with respect to the first planar portion 311. The first portion 321 may be disposed under the first planar portion 311. The first portion 321 may be attached to the first planar portion 311. The first portion 321 may be disposed (or interposed) between the first planar portion 311 and the first surface 211 of the first housing 210. The first portion 321 may be faced away from the first surface 211 of the first housing 210. The first portion 321 may be planar. A shape of the first portion 321 may be maintained while the state of the electronic device 200 is changed. For example, the first portion 321 may have a shape substantially parallel to the first surface 211 within the folding state and/or the unfolding state of the electronic device 200.

According to an embodiment, the second portion 322 may be positioned with respect to the second planar portion 312. The second portion 322 may be disposed under the second planar portion 312. The second portion 322 may be attached to the second planar portion 312. The second portion 322 may be disposed (or interposed) between the second planar portion 312 and the third surface 221 of the second housing 220. The second portion 322 may be faced away from the third surface 221 of the second housing 220. The second portion 322 may be planar. A shape of the second portion 322 may be maintained while the state of the electronic device 200 is changed. For example, the second portion 322 may have a shape substantially parallel to the first surface 211 within the folding state and/or the unfolding state of the electronic device 200. The second portion 322 may be spaced apart from the first portion 321. The second portion 322 may be connected to the first portion 321 by the third portion 323.

According to an embodiment, the third portion 323 may be disposed between the first portion 321 and the second portion 322. The third portion 323 may be disposed over the hinge structure 250. For example, the third portion 323 may be spaced apart from the hinge structure 250. The third portion 323 may be positioned with respect to the folding portion 313. The third portion 323 may correspond to the folding portion 313. The third portion 323 may be deformable as the state of the electronic device 200 is changed. The third portion 323 may be unfolded within the unfolding state of the electronic device 200. The third portion 323 may be positioned to be substantially parallel to the first portion 321 and the second portion 322 within the unfolding state of the electronic device 200. For example, the third portion 323 may form (or define) substantially one plane with the first portion 321 and the second portion 322 within the unfolding state of the electronic device 200. The third portion 323 may be bent to have a curvature with respect to the first portion 321 and the second portion 322 within the folding state of the electronic device 200. The third portion 323 may be folded within the folding state of the electronic device 200. According to an embodiment, the third portion 323 may include a plurality of openings 323a penetrating the third portion 323. The plurality of openings 323a may be spaced apart from each other. For example, the first plate 320 may relatively have a relative rigidity to protect the display 310. As the first plate 320 has a relative rigidity, a wrinkle due to stress generated by folding and/or unfolding may be formed in the third portion 323, in a case that the third portion 323 does not include the plurality of openings 323a. According to an embodiment, since the third portion 323 includes the plurality of openings 323a, the electronic device 200 may provide a structure in which damage to the first plate 320 protecting the display 310 may be reduced. For example, since a shape of the plurality of openings 323a is changed as the state of the electronic device 200 is changed, the wrinkle due to the stress may not be formed in the third portion 323.

According to an embodiment, thicknesses of the first portion 321, the second portion 322, and the third portion 323 may be substantially the same. A thickness of a component may indicate a distance in a direction (e.g., a +z direction) toward which the first surface 211 faces within the unfolding state of the electronic device 200, and the corresponding expression may be used substantially the same below unless otherwise stated.

According to an embodiment, the plurality of adhesive members 330 may attach (or adhere) a component of the electronic device 200 to another component. For example, the plurality of adhesive members 330 may include an adhesive material. For example, the plurality of adhesive members 330 may include a pressure sensitive adhesive (PSA), but are not limited to it. According to an embodiment, the plurality of adhesive members 330 may include a first adhesive member 331, a second adhesive member 332, a third adhesive member 333, and/or a fourth adhesive member 334.

According to an embodiment, the first adhesive member 331 may attach the first portion 321 to the first planar portion 311. The first portion 321 may be attached to the first planar portion 311 by the first adhesive member 331. For example, the first adhesive member 331 may be in contact with the first portion 321. For example, the first adhesive member 331 may be interposed between the first portion 321 and the first planar portion 311. For example, the first adhesive member 331 may be attached to (or in contact with) a surface 321a of the first portion 321 facing the first planar portion 311 (or the display 310).

According to an embodiment, the second adhesive member 332 may attach the second portion 322 to the second planar portion 312. The second portion 322 may be attached to the first planar portion 312 by the second adhesive member 332. For example, the second adhesive member 332 may be in contact with the second portion 322. For example, the second adhesive member 332 may be interposed between the second portion 322 and the second planar portion 312. The second adhesive member 332 may be disconnected from the first adhesive member 331. For example, the second adhesive member 332 may be spaced apart from the first adhesive member 331. For example, the second adhesive member 332 may be attached to (or in contact with) a surface 322a of the second portion 322 facing the second planar portion 312 (or the display 310).

According to an embodiment, the third adhesive member 333 may attach the first reinforcing member 350 to the folding portion 313. The first reinforcing member 350 may be attached to the folding portion 313 by the third adhesive member 333. The third adhesive member 333 may be disposed (or interposed) between the first reinforcing member 350 and the folding portion 313. For example, the third adhesive member 333 may be in contact with the first reinforcing member 350. For example, the third adhesive member 333 may be disposed on a surface 350a of the first reinforcing member 350 facing the folding portion 313 (or the display 310). For example, the third adhesive member 333 may be in contact with the surface 350a of the first reinforcing member 350 facing the folding portion 313. The third adhesive member 333 may be disconnected from the first adhesive member 331 and the second adhesive member 332. For example, the third adhesive member 333 may be spaced apart from the first adhesive member 331 and the second adhesive member 332. The third adhesive member 333 may be disposed between the first adhesive member 331 and the second adhesive member 332. For example, an air gap may be formed (or positioned) between the third adhesive member 333 and the first adhesive member 331, and between the third adhesive member 333 and the second adhesive member 332 within the unfolding state of the electronic device 200. For example, the third adhesive member 333 may be formed separately from the first adhesive member 331 and the second adhesive member 332. For example, in a case that the first adhesive member 331, the second adhesive member 332, and the third adhesive member 333 are connected to each other, a wrinkle due to stress generated as the state of the electronic device 200 is changed to the folding state and/or the unfolding state may be formed on at least one of the first adhesive member 331, the second adhesive member 332, and the third adhesive member 333. According to an embodiment, since the third adhesive member 333 is disconnected from the first adhesive member 331 and the second adhesive member 332, the electronic device 200 may provide a structure capable of reducing damage to the first adhesive member 331, the second adhesive member 332, and the third adhesive member 333 due to stress.

According to an embodiment, the fourth adhesive member 334 may attach the protective layer 340 to the display 310. For example, the fourth adhesive member 334 may be disposed on the first housing 210 and the second housing 220 across the hinge structure 250. For example, the fourth adhesive member 334 may be attached to the first planar portion 311, the second planar portion 312, and the folding portion 313.

According to an embodiment, the protective layer 340 may suppress (or reduce) a step between components under the display 310 from being visible outside the electronic device 200. For example, the protective layer 340 may be formed of a polymer (e.g., polyimide (PI)). For example, the protective layer 340 may cover a step caused by the air gap between the third adhesive member 333 and the first adhesive member 331, and between the third adhesive member 333 and the second adhesive member 332. The protective layer 340 may be attached to the display 310 by the fourth adhesive member 334. The protective layer 340 may be disposed on the first housing 210 and the second housing 220 across the hinge structure 250. For example, the protective layer 340 may be attached to the first planar portion 311, the second planar portion 312, and the folding portion 313. However, it is not limited thereto. According to embodiments, the fourth adhesive member 334 and/or the protective layer 340 may be omitted. In a case that the fourth adhesive member 334 and/or the protective layer 340 is omitted, the first adhesive member 331 may be in contact with the first planar portion 311 and the first portion 321. In a case that the fourth adhesive member 334 and/or the protective layer 340 is omitted, the second adhesive member 332 may be in contact with the second planar portion 312 and the second portion 322. In a case that the fourth adhesive member 334 and/or the protective layer 340 is omitted, the third adhesive member 333 may be in contact with the folding portion 313 and the first reinforcing member 350.

According to an embodiment, the first reinforcing member 350 may reduce damage to the folding portion 313 and/or the third portion 323. For example, the first reinforcing member 350 may reduce an impact transmitted to the folding portion 313 and/or the third portion 323. The first reinforcing member 350 may be positioned with respect to the folding portion 313. The first reinforcing member 350 may be attached to the folding portion 313. The first reinforcing member 350 may be interposed (or disposed) between the folding portion 313 and the third portion 323. The first reinforcing member 350 may overlap the third portion 323. For example, at least a portion of the first reinforcing member 350 may overlap the plurality of openings 323a of the third portion 323. A rigidity of the first reinforcing member 350 may be higher than a rigidity of each of the plurality of adhesive members 330. For example, Young's modulus of the first reinforcing member 350 may be higher than Young's modulus of each of the plurality of adhesive members 330. For example, the Young's modulus of the first reinforcing member 350 may be greater than or equal to 10 Gpa. For example, a thickness of the first reinforcing member 350 may be greater than or equal to 15 µm, but is not limited thereto. For example, the first reinforcing member 350 may be formed of metal (e.g., stainless steel and/or titanium), carbon fiber reinforced plastic (CFRP), and/or glass fiber reinforced plastic (GFRP), but is not limited thereto. In a case that the first reinforcing member 350 is omitted, a rigidity of the third portion 323 is relatively reduced by the plurality of openings 323a when the external force in a direction (e.g., a -z direction) opposite to a direction (e.g., a +z direction) toward which the first surface 211 faces is transmitted to the folding portion 313 within the unfolding state of the electronic device 200, and thus the third portion 313 and the third portion 323 may be damaged by an external force. According to an embodiment, the electronic device 300 may provide a structure capable of reducing damage to the display 310 by the first reinforcing member 350 interposed between the folding portion 313 and the third portion 323. According to an embodiment, a size (or extent) of the first reinforcing member 350 may be smaller than extent of the folding portion 313. For example, a height of the first reinforcing member 350 may be smaller than a height of the folding portion 313. A height of a component may indicate a length in a y-axis direction. However, it is not limited thereto. For example, the height of the first reinforcing member 350 may be greater than the height of the folding portion 313. In a case that the height of the first reinforcing member 350 is greater than the height of the folding portion 313, an entire area of the folding portion 313 may overlap the first reinforcing member 350.

According to an embodiment, the rigidity of the first reinforcing member 350 may be different from a rigidity of the first plate 320. For example, the rigidity of the first reinforcing member 350 may be higher than the rigidity of the first plate 320. For example, a degree of deformation of the first reinforcing member 350 due to an external force may be smaller than a degree of deformation of the first plate 320 due to an external force. However, it is not limited thereto. For example, the rigidity of the first reinforcing member 350 may be substantially the same as the rigidity of the first plate 320.

According to an embodiment, a width of the first reinforcing member 350 may correspond to a curvature of the first plate 320 in the folding state of the electronic device 200. For example, the curvature of the first plate 320 in the folding state of the electronic device 200 may correspond to a width of the plurality of openings 323a formed in the third portion 323. For example, the width of the first reinforcing member 350 may correspond to the folding portion 313 and/or the third portion 323. For example, a width of a component may indicate a distance in a direction (e.g., a -x direction) facing from the first planar portion 311 to the second planar portion 312 within the unfolding state of the electronic device 200, and the corresponding expression may be used substantially the same below unless otherwise stated. The width of the first reinforcing member 350 may greater than or equal to a width of a portion of the third portion 323 in which the plurality of openings 323a are formed. For example, in the folding state of the electronic device 200, a linear distance d1 from a center c1 of the first plate 320 to a portion of the third portion 323 in which the plurality of openings 323a are formed may be smaller than a linear distance d2 from a center c1 of the first plate 320 to the first reinforcing member 350.

According to an embodiment, a width of the third adhesive member 333 may correspond to a width of the first reinforcing member 350. For example, the width of the third adhesive member 333 may be substantially the same as the width of the first reinforcing member 350. In order to compensate for a step by the first reinforcing member 350, a thickness of the third adhesive member 333 may be smaller than a thickness of each of the first adhesive member 331 and the second adhesive member 332. A sum of a thickness of the third adhesive member 333 and a thickness of the first reinforcing member 350 may be substantially the same as a thickness of each of the first adhesive member 331 and the second adhesive member 332. For example, in a case that the thickness of the third adhesive member 333 has a size greater than or equal to the thickness of each of the first adhesive member 331 and the second adhesive member 332, the folding portion 313 of the display 310 corresponding to the first reinforcing member 350 may protrude with respect to the first planar portion 311 and the second planar portion 312. According to an embodiment, since the thickness of the third adhesive member 333 is smaller than the thickness of each of the first adhesive member 331 and the second adhesive member 332, the electronic device 200 may provide a structure in which the folding portion 313 does not form a step with respect to the first planar portion 311 and the second planar portion 312.

Meanwhile, in FIGS. 3B and 3C, it is illustrated that the first reinforcing member 350 and the first plate 320 are in direct contact with each other, but embodiments are not limited thereto. For example, the first reinforcing member 350 and the first plate 320 may be spaced apart from each other. In a case that the first reinforcing member 350 and the first plate 320 are spaced apart from each other, a gap may be formed (or positioned) between the first reinforcing member 350 and the first plate 320.

According to an embodiment, the support plate 410 may support the display 310 to reduce damage to the display 310. The support plate 410 may define (or form) an outer surface of a display module (e.g., the display module 160 of FIG. 1). For example, the support plate 410 may be formed of a material (e.g., metal and/or CFRP) with a rigidity to support the display 310. For example, the support plate 410 may support the first planar portion 311 and the second planar portion 312. For example, the support plate 410 may include a first support portion 411 aligned with the first planar portion 311 and/or a second support portion 412 aligned with the second planar portion 312. The first support portion 411 and the second support portion 412 may be disconnected from each other. For example, the first support portion 411 and the second support portion 412 may be spaced apart from each other. The first support portion 411 and the second support portion 412 may be misaligned with the folding portion 313. For example, when the display 310 is viewed from above, the first support portion 411 and the second support portion 412 may be disposed outside the folding portion 313. However, it is not limited thereto. For example, a portion of the first support portion 411 and a portion of the second support portion 412 may overlap a portion of the folding portion 313, respectively. The support plate 410 may be omitted according to embodiments.

According to an embodiment, the electromagnetic induction panel 420 may be configured to receive an input from an electronic pen distinguished from the electronic device 200. For example, the electromagnetic induction panel 420 may obtain data for identifying a relative position of the electronic pen over the display 310 based on receiving an induced current from the electronic pen. The electromagnetic induction panel 420 may be disposed under the display 310. For example, the electromagnetic induction panel 420 may be disposed between the display 310 and the first plate 320. The electromagnetic induction panel 420 may include a first panel 421 and a second panel 422 that are disconnected from each other. The first panel 421 and the second panel 422 may be spaced apart from each other. The first panel 421 may be aligned with the first planar portion 311 and a portion of the folding portion 313. The second panel 422 may be aligned with the second planar portion 312 and another portion of the folding portion 313. The first panel 421 and the second panel 422 may be spaced apart from each other in the folding portion 313 when the display 310 is viewed from above. However, it is not limited thereto. For example, the electromagnetic induction panel 420 may be omitted.

As described above, according to an embodiment, the electronic device 200 may provide a structure capable of reducing damage to the display 310 by the first reinforcing member 350 disposed between the folding portion 313 and the third portion 323, which are relatively vulnerable to an impact.

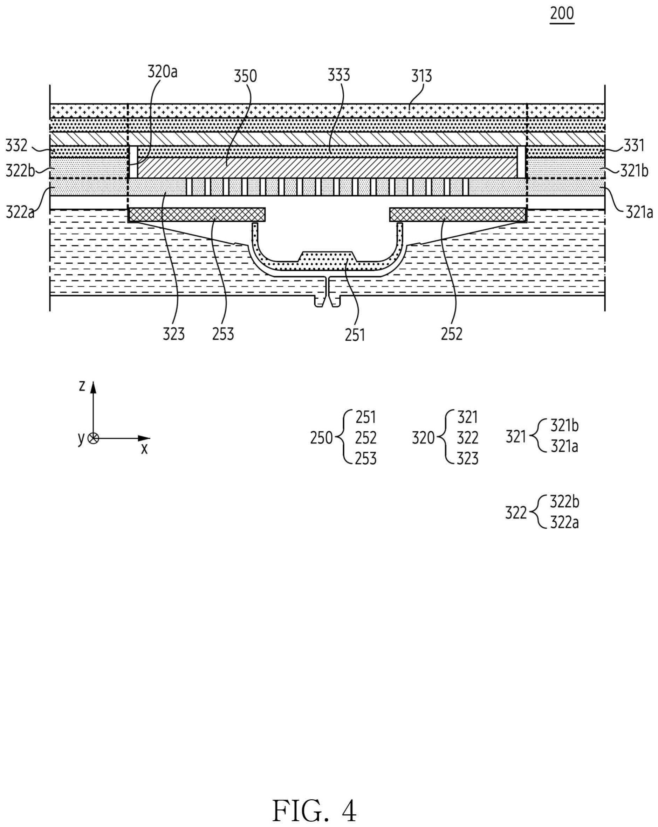

FIG. 4 is a cross-sectional view illustrating a case in which an exemplary electronic device is in an unfolding state according to an embodiment.

Since an electronic device 200 of FIG. 4 may be the electronic device 200 in which a structure of a first plate 320 is changed in the electronic device 200 of FIGS. 3A, 3B, and/or 3C, a redundant description will be omitted.

Referring to FIG. 4, according to an embodiment, the electronic device 200 may include a hinge structure 250. The hinge structure 250 may include a hinge cover 251, a first hinge plate 252, and/or a second hinge plate 253.

According to an embodiment, a thickness of a third portion 323 may be different from each of a thickness of a first portion 321 and a thickness of the second portion 322. For example, the thickness of the third portion 323 may be thinner than the thickness of the first portion 321 and the thickness of the second portion 322. For example, the thickness of the first portion 321 may be substantially the same as the thickness of the second portion 322. For example, the thickness of the third portion 323 may be half of the thickness of the first portion 321, but is not limited thereto.

According to an embodiment, a thickness of a portion 321a of the first portion 321 may be substantially the same as a thickness of the third portion 323. Another portion 321b of the first portion 321 may be disposed on the portion 321a of the first portion 321. The other portion 321b of the first portion 321 may be connected to the portion 321a of the first portion 321. For example, the other portion 321b of the first portion 321 may be in contact with a first adhesive member 331. For example, a thickness of the other portion 321b of the first portion 321 may be substantially the same as a thickness of a first reinforcing member 350, but is not limited thereto.

According to an embodiment, a thickness of a portion 322a of the second portion 322 may be substantially the same as a thickness of the third portion 323. Another portion 322b of the second portion 322 may be disposed on the portion 322a of the second portion 322. The other portion 322b of the second portion 322 may be connected to the portion 322a of the second portion 322. For example, the other portion 322b of the second portion 322 may be in contact with a second adhesive member 332. For example, a thickness of the other portion 322b of the second portion 322 may be substantially the same as a thickness of the first reinforcing member 350, but is not limited thereto.

According to an embodiment, the third portion 323 may be formed by removing a portion of the first plate 320 corresponding to the third portion 323. For example, while the first plate 320 is manufactured, a portion of the first plate 320 having a thickness corresponding to a thickness of each of the other portion 321b of the first portion 321 and the other portion 322b of the second portion 322 may be removed. For example, as the portion of the first plate 320 having the thickness corresponding to the thickness of each of the other portion 321b of the first portion 321 and the other portion 322b of the second portion 322 is etched, the third portion 323 may be formed. As a thickness of the third portion 323 is different from each of a thickness of the first portion 321 and the thickness of the second portion 322, a step may be formed (or defined) between the first portion 321 and the third portion 323, and between the second portion 322 and the third portion 323.

According to an embodiment, the first reinforcing member 350 may be disposed between the first portion 321 and the second portion 322. For example, the first reinforcing member 350 may be surrounded (or covered) by the first portion 321 and the second portion 322. For example, the first reinforcing member 350 may be disposed (or interposed) between the other portion 321b of the first portion 321 and the other portion 322b of the second portion 322. The first reinforcing member 350 may be surrounded (or covered) by the other portion 321b of the first portion 321 and the other portion 322b of the second portion 322. For example, the first reinforcing member 350 may be accommodated (or disposed) in a groove 320a of the first plate 320 formed by a thickness difference between the first portion 321 and the third portion 323 and a thickness difference between the second portion 322 and the third portion 323. The groove 320a of the first plate 320 may be disposed (or interposed) between the other portion 321b of the first portion 321 and the other portion 322b of the second portion 322. The groove 320a of the first plate 320 may be positioned with respect to a folding portion 313. For example, a position of the groove 320a of the first plate 320 may correspond to a position of the folding portion 313. As the groove 320a of the first plate 320 for accommodating the first reinforcing member 350 is formed in the first plate 320, a thickness of the electronic device 200 may not increase by the first reinforcing member 350. As the thickness of the electronic device 200 does not increase, portability of the electronic device 200 may be enhanced.

According to an embodiment, the thickness of the first reinforcing member 350 may be thinner than the thickness of the first portion 321 and the thickness of the second portion 322. For example, a sum of the thickness of the first reinforcing member 350 and the thickness of the third portion 323 may be substantially the same as the thickness of the first portion 321 and the thickness of the second portion 322, but is not limited thereto. For example, the sum of the thickness of the first reinforcing member 350 and the thickness of the third portion 323 may be smaller than each of the thickness of the first portion 321 and the thickness of the second portion 322. According to an embodiment, a thickness of a third adhesive member 333 may be substantially the same as a thickness of the first adhesive member 331 and a thickness of the second adhesive member 332.

As described above, according to an embodiment, the electronic device 200 may provide a structure capable of reducing damage to a display 310 by the first reinforcing member 350 disposed over the third portion 323 thinner than the first portion 321 and the second portion 322.

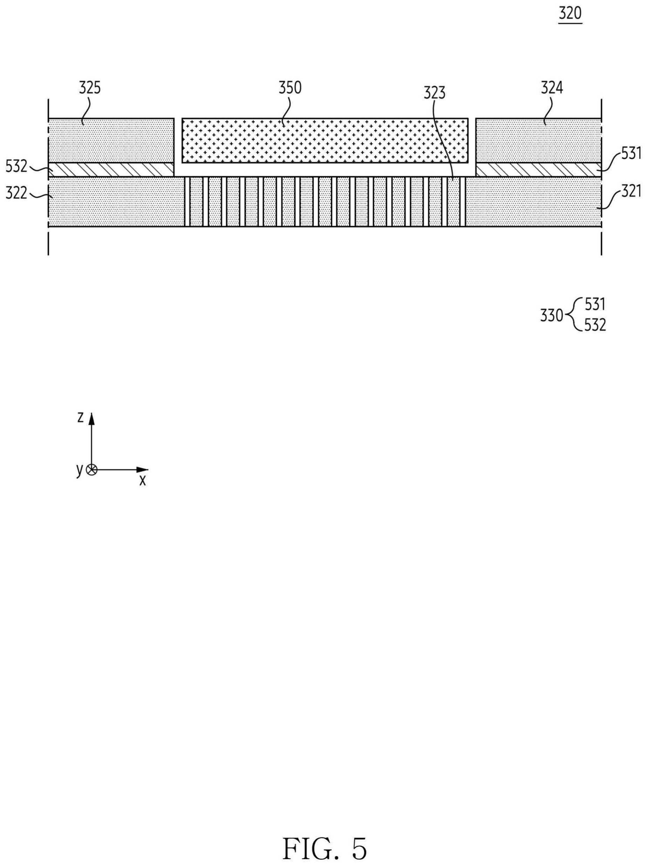

FIG. 5 is a cross-sectional view indicating an exemplary plate and a first reinforcing member according to an embodiment.

Since a first plate 320 of FIG. 5 may be a first plate 320 of which a structure is changed in the first plate 320 of FIGS. 3A, 3B, and/or 3C, a redundant description will be omitted.

Referring to FIG. 5, according to an embodiment, the first plate 320 may further include a fourth portion 324 and a fifth portion 325.

According to an embodiment, the fourth portion 324 may be disposed on a first portion 321. For example, the fourth portion 324 may be attached to the first portion 321. For example, the fourth portion 324 may overlap the first portion 321. For example, the fourth portion 324 may not overlap a third portion 323.

According to an embodiment, the fifth portion 325 may be disposed on a second portion 322. For example, the fifth portion 325 may be attached to the second portion 322. For example, the fifth portion 325 may overlap the second portion 322. For example, the fifth portion 325 may not overlap the third portion 323. The fifth portion 325 may be spaced apart from the fourth portion 324. For example, the fifth portion 325 may be disconnected (or separated) from the fourth portion 324.

According to an embodiment, a plurality of adhesive members 330 may further include a fifth adhesive member 531 and a sixth adhesive member 532.

According to an embodiment, the fifth adhesive member 531 may attach the fourth portion 324 to the first portion 321. The fifth adhesive member 531 may be disposed (or interposed) between the fourth portion 324 and the first portion 321. For example, the fifth adhesive member 531 may be in contact with the fourth portion 324 and the first portion 321.

According to an embodiment, the sixth adhesive member 532 may attach the fifth portion 325 to the second portion 322. The sixth adhesive member 532 may be disposed (or interposed) between the fifth portion 325 and the second portion 322. For example, the sixth adhesive member 532 may be in contact with the fifth portion 325 and the second portion 322. The sixth adhesive member 532 may be spaced apart from the fifth adhesive member 531. For example, the sixth adhesive member 532 may be disconnected (or separated) from the fifth adhesive member 531.

According to an embodiment, a first reinforcing member 350 may be disposed (or interposed) between the fourth portion 324 and the fifth portion 325. The first reinforcing member 350 may overlap the third portion 323 by being disposed between the fourth portion 324 and the fifth portion 325. For example, a thickness of the first reinforcing member 350 may be greater than or equal to a thickness of each of the fourth portion 324 and the fifth portion 325. For example, the thickness of the first reinforcing member 350 may be substantially the same as each of the thickness of the fourth portion 324 and the thickness of the fifth portion 325. For example, the thickness of the first reinforcing member 350 may be substantially the same as a sum of the thickness of the fourth portion 324 and a thickness of the fifth adhesive member 531. For example, the thickness of the first reinforcing member 350 may be substantially the same as a sum of the thickness of the fifth portion 325 and a thickness of the sixth adhesive member 532. However, it is not limited thereto. For example, the thickness of the first reinforcing member 350 may be thinner than the thickness of each of the fourth portion 324 and the fifth portion 325.

According to an embodiment, each of the fourth portion 324 and the fifth portion 325 may be formed of a material different from another portion of the first reinforcing member 350. For example, the fourth portion 324 may be attached to the first portion 321 through the fifth adhesive member 531 after being formed of a material different from the first portion 321. For example, the fifth portion 325 may be attached to the second portion 322 through the sixth adhesive member 532 after being formed of a material different from the second portion 322. However, it is not limited thereto. For example, each of the fourth portion 324 and the fifth portion 325 may be formed of substantially the same material as the other portion of the first reinforcing member 350.

As described above, according to an embodiment, the electronic device 200 may provide a structure capable of reducing damage to a display 310 by the first reinforcing member 350 disposed between the fourth portion 324 and the fifth portion 325.

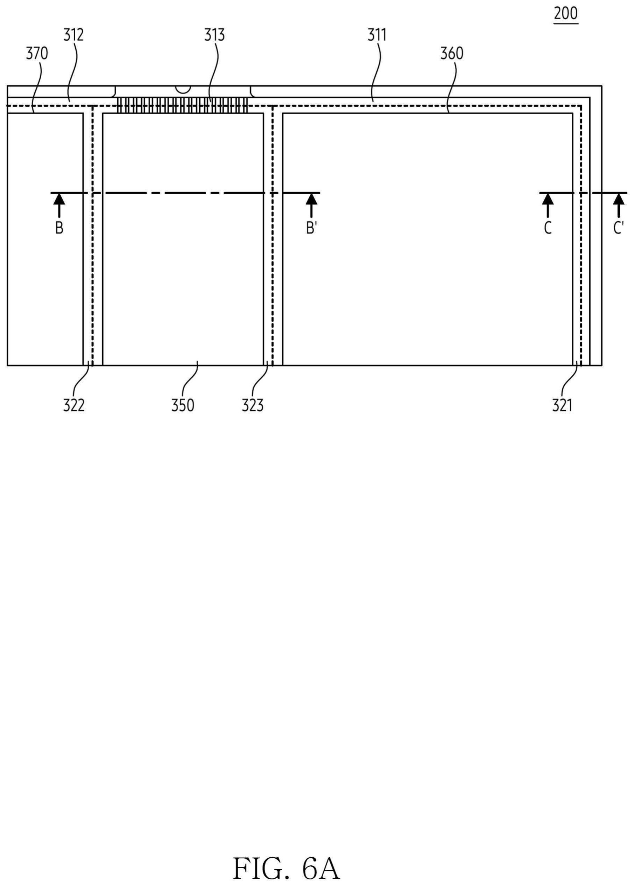

6A is a top view illustrating a case in which an exemplary electronic device is in an unfolding state according to an embodiment, 6B is a cross-sectional view illustrating an example in which an exemplary electronic device is cut along line B-B' of FIG. 6A according to an embodiment, and 6C is a cross-sectional view illustrating an example in which an exemplary electronic device is cut along line C-C' of FIG. 6A according to an embodiment.

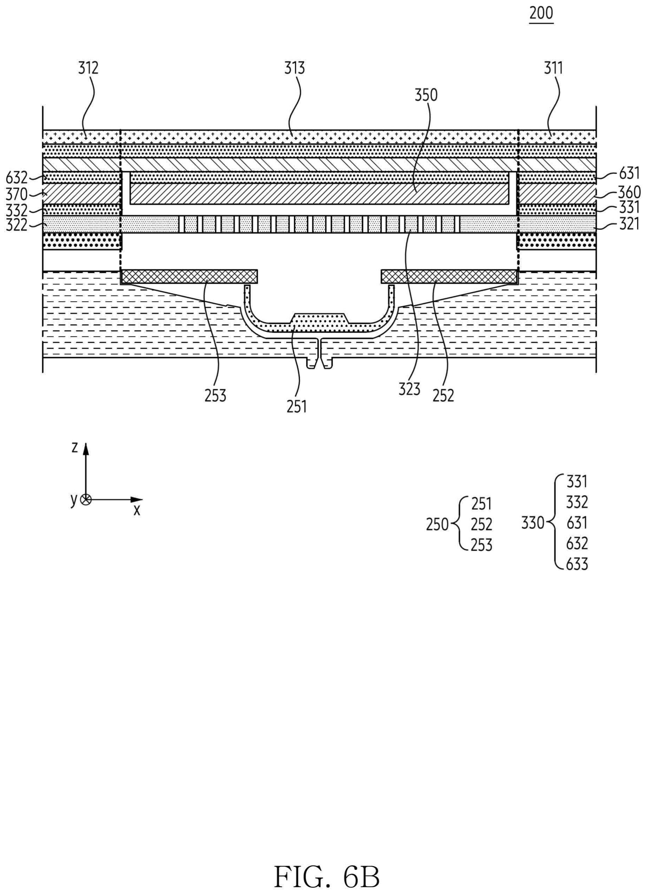

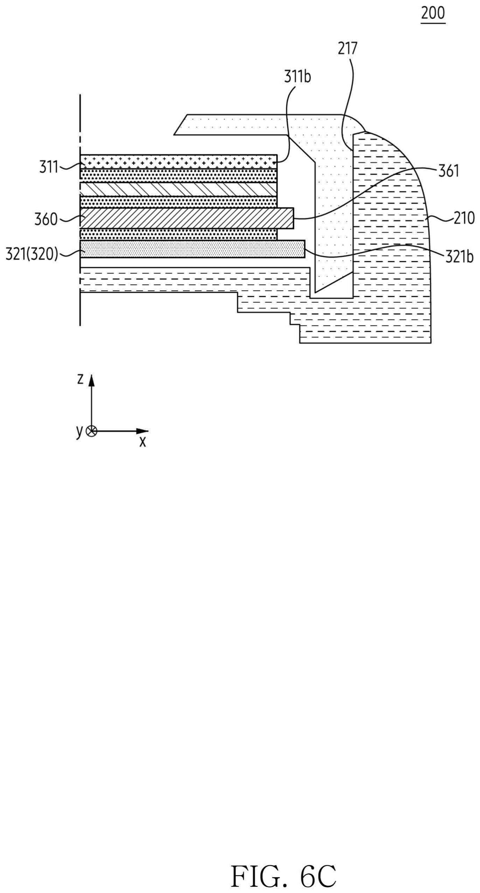

Since an electronic device 200 of FIGS. 6A, 6B, and 6C may be the electronic device 200 to which a second reinforcing member 360 and/or a seventh reinforcing member 370 is added in the electronic device 200 of FIGS. 3A, 3B, and 3C, a redundant description is omitted.

According to an embodiment, referring to FIGS. 6A, 6B, and 6C, the electronic device 200 may include a hinge structure 250. The hinge structure 250 may include a hinge cover 251, a first hinge plate 252, and/or a second hinge plate 253.

According to an embodiment, the electronic device 200 may further include the second reinforcing member 360 and/or the third reinforcing member 370.

According to an embodiment, the second reinforcing member 360 may be positioned with respect to a first planar portion 311. The second reinforcing member 360 may be disposed (or interposed) between a first portion 321 and the first planar portion 311. The second reinforcing member 360 may be disposed on the first portion 321. The second reinforcing member 360 may be attached on the first portion 321. According to an embodiment, the second reinforcing member 360 and a first reinforcing member 350 may include substantially the same material. For example, the second reinforcing member 360 may be formed of substantially the same material as the first reinforcing member 350. However, it is not limited thereto. For example, the second reinforcing member 360 may be formed of a material different from the first reinforcing member 350.

According to an embodiment, the third reinforcing member 370 may be positioned with respect to a second planar portion 312. The third reinforcing member 370 may be disposed (or interposed) between a second portion 322 and the second planar portion 312. The third reinforcing member 370 may be attached on the second portion 322. According to an embodiment, the third reinforcing member 370 and the first reinforcing member 350 may include substantially the same material. For example, the third reinforcing member 370 may be formed of substantially the same material as the first reinforcing member 350. However, it is not limited thereto. The third reinforcing member 370 may be formed of a material different from the first reinforcing member 350.

According to an embodiment, the first reinforcing member 350 may be disconnected from the second reinforcing member 360 and the third reinforcing member 370. For example, a gap may be positioned (or formed) between the first reinforcing member 350 and the second reinforcing member 360, and between the first reinforcing member 350 and the third reinforcing member 370 in an unfolding state of the electronic device 200.

According to an embodiment, a first adhesive member 331 may be disposed (or interposed) between the first portion 321 and the second reinforcing member 360. A second adhesive member 332 may be disposed (or interposed) between the second portion 322 and the third reinforcing member 370.

According to an embodiment, a plurality of adhesive members 330 may further include a seventh adhesive member 631 and an eighth adhesive member 632.

According to an embodiment, the seventh adhesive member 631 may attach the second reinforcing member 360 to the first planar portion 311. The seventh adhesive member 631 may be disposed (or interposed) between the second reinforcing member 360 and the first planar portion 311.

According to an embodiment, the eighth adhesive member 632 may attach the third reinforcing member 370 to the second planar portion 312. The eighth adhesive member 632 may be disposed (or interposed) between the third reinforcing member 370 and the second planar portion 312.

According to an embodiment, an interval between the first reinforcing member 350 and a third portion 323 may correspond to each of a thickness of the seventh adhesive member 631 and a thickness of the eighth adhesive member 632. For example, the interval between the first reinforcing member 350 and the third portion 323 may be greater than or equal to the thickness of each of the seventh adhesive member 631 and the eighth adhesive member 632, but is not limited thereto. For example, the interval between the first reinforcing member 350 and the third portion 323 may be substantially the same as each of the thickness of the seventh adhesive member 631 and the thickness of the eighth adhesive member 632.

Referring to FIG. 6C, according to an embodiment, a width of the first portion 321 of a first plate 320 may be longer than a width of the first planar portion 311 of a display 310. For example, a distance between a lateral surface 311b of the first planar portion 311 and an inner lateral surface 217 of a first housing 210 may be longer than a distance between a lateral surface 321b of the first portion 321 and the inner lateral surface 217 of the first housing 210. The lateral surface 311b of the first planar portion 311 may face the inner lateral surface 217 of the first housing 210. For example, in the unfolding state of the electronic device 200, a direction (e.g., a +x direction) toward which the lateral surface 311b of the first planar portion 311 faces may be opposite to a direction (e.g., a -x direction) toward which the inner lateral surface 217 of the first housing 210 faces. Since the width of the first portion 321 is longer than the width of the first planar portion 311, damage to the display 310 due to contact between the first housing 210 and the display 310 may be reduced.

According to an embodiment, a width of the second reinforcing member 360 may be longer than a width of the first planar portion 311. For example, a distance between a lateral surface 361 of the second reinforcing member 360 and the inner lateral surface 217 of the first housing 210 may be shorter than a distance between the lateral surface 311b of the first planar portion 311 and the inner lateral surface 217 of the first housing 210. The lateral surface 361 of the second reinforcing member 360 may face the inner lateral surface 217 of the first housing 210. For example, in the unfolding state of the electronic device 200, a direction (e.g., a +x direction) toward which the lateral surface 361 of the second reinforcing member 360 faces may be opposite to a direction (e.g., a -x direction) toward which the inner lateral surface 217 of the first housing 210 faces. Since the width of the second reinforcing member 360 is longer than the width of the first planar portion 311, damage to the display 310 due to the contact between the first housing 210 and the display 310 may be reduced.

According to an embodiment, the width of the second reinforcing member 360 may be shorter than the width of the first portion 321. For example, the distance between the lateral surface 361 of the second reinforcing member 360 and the inner lateral surface 217 of the first housing 210 may be longer than the distance between the lateral surface 321b of the first portion 321 and the inner lateral surface 217 of the housing 210. However, it is not limited thereto. The width of the second reinforcing member 360 may be greater than or equal to the width of the first portion 321.

Meanwhile, a description of the width of each of the first planar portion 311, the second reinforcing member 360, and the first portion 321 described above may be applied substantially the same to the second planar portion 312, the third reinforcing member 370, and the second portion 322.

As described above, according to an embodiment, the electronic device 200 may provide a structure capable of reducing damage to the display 310 due to an external force and/or an impact by the second reinforcing member 360 disposed under the first planar portion 311 and the third reinforcing member 370 disposed under the second planar portion 312.

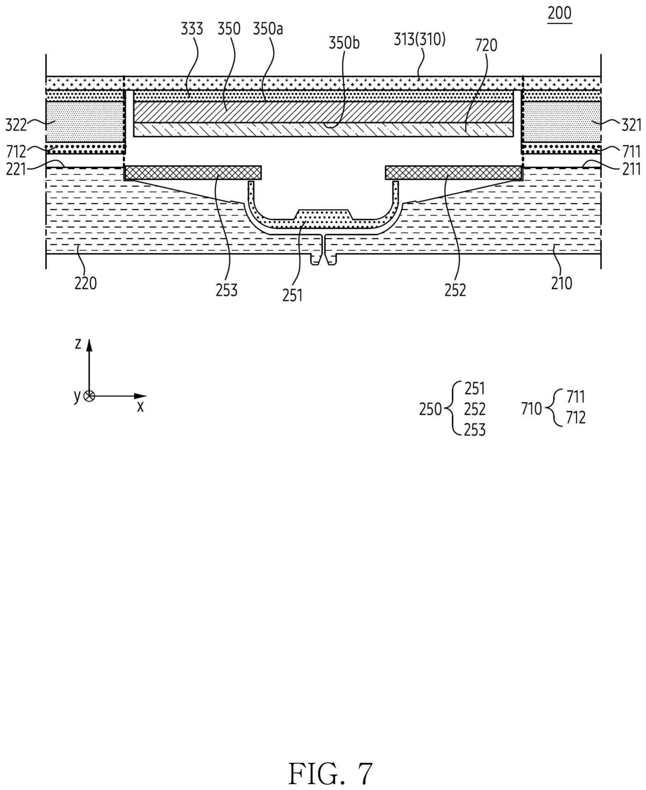

FIG. 7 is a cross-sectional view illustrating a case in which an exemplary electronic device is in an unfolding state according to an embodiment.

Since an electronic device 200 of FIG. 7 may be the electronic device 200 to which a structure of a first plate 320 is changed and a deforming member 720 is added in the electronic device 200 of FIGS. 3A, 3B, and 3C, a redundant description will be omitted.

According to an embodiment, the electronic device 200 may include a hinge structure 250. The hinge structure 250 may include a hinge cover 251, a first hinge plate 252, and/or a second hinge plate 253.

Referring to FIG. 7, according to an embodiment, a first portion 321 and a second portion 322 of the first plate 320 may be disconnected from each other. For example, the first portion 321 of the first plate 320 may be spaced apart from the second portion 322.

According to an embodiment, a first reinforcing member 350 may be disposed (or interposed) between the first portion 321 and the second portion 322. For example, between the first portion 321 and the second portion 322, the first reinforcing member 350 may not be in contact with the first portion 321 and the second portion 322.

According to an embodiment, the electronic device 200 may further include a second plate 710 and/or the deforming member 720.

According to an embodiment, the second plate 710 may activate heat transfer between a first housing 210 and a second housing 220. For example, the second plate 710 may provide a passage through which heat from the first housing 210 may move to the second housing 220. For example, the second plate 710 may provide a passage through which heat from the second housing 220 may move to the first housing 210. According to an embodiment, the second plate 710 may include a first area 711 and a second area 712.

According to an embodiment, the first area 711 may be disposed on the first housing 210. For example, the first area 711 may be faced away from a first surface 211. The first area 711 may be disposed (or interposed) between the first portion 321 of the first plate 320 and the first surface 211. For example, the first area 711 may be attached to the first portion 321.

According to an embodiment, the second area 712 may be disposed on the second housing 220. For example, the second area 712 may be faced away from a third surface 221. The second area 712 may be disposed (or interposed) between the second portion 322 of the first plate 320 and the third surface 221. For example, the second area 712 may be attached to the second portion 322.

According to an embodiment, the deforming member 720 may reduce (or suppress) a foreign substance introduced into the hinge cover 251 from being transmitted to the display 310. The deforming member 720 may be deformable. For example, the deforming member 720 may be formed of thermoplastic polyurethane (TPU). For example, the deforming member 720 may be referred to as a cushion.

According to an embodiment, the deforming member 720 may be disposed under the first reinforcing member 350. The deforming member 720 may be attached to the first reinforcing member 350. For example, the deforming member 720 may be disposed on another surface 350b of the first reinforcement member 350 opposite to a surface 350a of the first reinforcing member 350 on which a third adhesive member 333 is disposed. The surface 350a of the first reinforcing member 350 may face a folding portion 313. In the unfolding sate of the electronic device 200, a direction (e.g., a -z direction) toward which the other surface 350b of the first reinforcing member 350 faces may be opposite to a direction (e.g., a +z direction) toward which the surface 350a of the first reinforcing member 350 faces. According to an embodiment, a width of the deforming member 720 may be less than or equal to a width of the first reinforcing member 350. For example, the width of the deforming member 720 may be substantially the same as the width of the first reinforcing member 350. For example, the width of the deforming member 720 may be smaller than the width of the first reinforcing member 350. According to an embodiment, the thickness of the deforming member 720 may be greater than the thickness of the first reinforcing member 350, but is not limited thereto. For example, the thickness of the deforming member 720 may be less than or equal to the thickness of the first reinforcing member 350.

As described above, according to an embodiment, the electronic device 200 may provide a structure capable of reducing damage to the display 310 due to an external force and/or an impact by the first reinforcing member 350 disposed between the first portion 321 and the second portion 322.

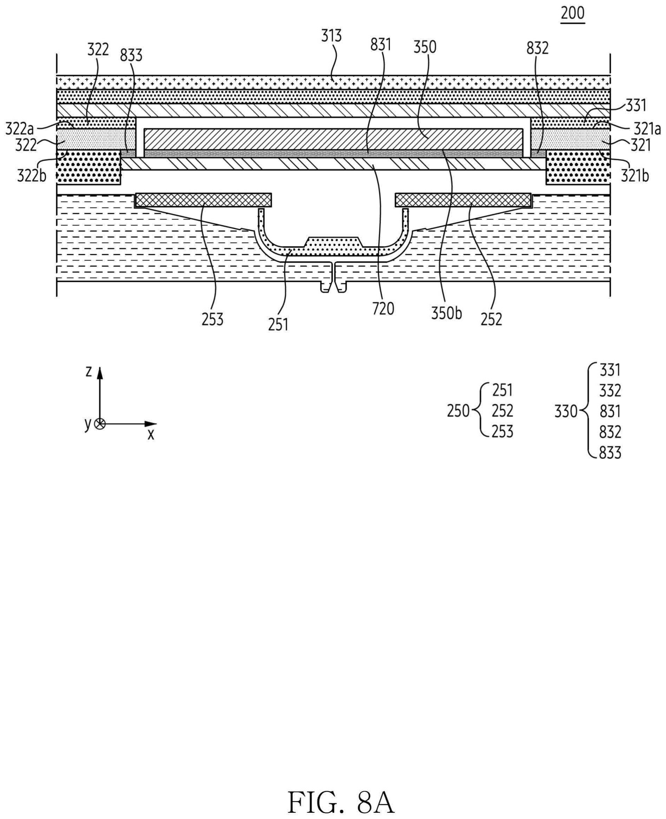

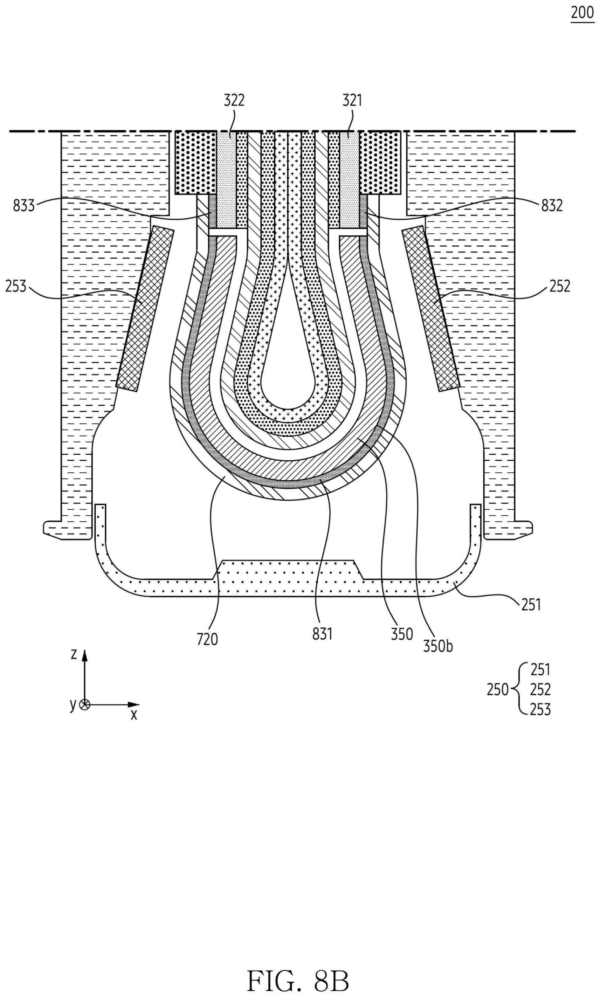

FIG. 8A is a cross-sectional view illustrating a case in which an exemplary electronic device is in an unfolding state according to an embodiment, and FIG. 8B is a cross-sectional view illustrating a case in which an exemplary electronic device is in a folding state according to an embodiment.

Since an electronic device 200 of FIG. 8A and FIG. 8B may be the electronic device 200 in which a disposition relationship between a first reinforcing member 350 and a deforming member 720 in the electronic device 200 of FIGS. 7A and/or 7B is changed, a redundant description will be omitted,.

Referring to FIGS. 8A and 8B, according to an embodiment, the electronic device 200 may include a hinge structure 250. The hinge structure 250 may include a hinge cover 251, a first hinge plate 252, and/or a second hinge plate 253.

According to an embodiment, the deforming member 720 may support the first reinforcing member 350 such that the first reinforcing member 350 faces a folding portion 313. The deforming member 720 may be attached to the first reinforcing member 350. For example, the deforming member 720 may be attached to another surface 350b of the first reinforcing member 350. According to an embodiment, as a state of the electronic device 200 is changed, the deforming member 720 may be deformed. For example, as the state of the electronic device 200 is changed from an unfolding state to a folding state, the deforming member 720 may extend. For example, as the state of the electronic device 200 is changed from the unfolding state to the folding state, a shape of the deforming member 720 may be restored.

According to an embodiment, the deforming member 720 may be attached to at least one of a first portion 321 and a second portion 322. For example, an end of the deforming member 720 may be attached to another surface 321b of the first portion 321 opposite to a surface 321a of the first portion 321 in contact with a first adhesive member 331. For example, another end of the deforming member 720 opposite to the end of the deforming member 720 may be attached to another surface 322b of the second portion 322 opposite to a surface 322a of the second portion 322 in contact with a second adhesive member 332.

According to an embodiment, a plurality of adhesive members 330 may further include a ninth adhesive member 831, a tenth adhesive member 832, and/or an eleventh adhesive member 833.

According to an embodiment, the ninth adhesive member 831 may attach the first reinforcing member 350 to the deforming member 720. For example, the ninth adhesive member 831 may be disposed (or interposed) between the first reinforcing member 350 and the deforming member 720. For example, the ninth adhesive member 831 may be attached (or be in contact with) to the other surface 350b of the first reinforcing member 350.

According to an embodiment, the tenth adhesive member 832 may attach the deforming member 720 to the first portion 321. For example, the tenth adhesive member 832 may be disposed (or interposed) between the deforming member 720 and the first portion 321. For example, the tenth adhesive member 832 may be attached (or be in contact with) to the other surface 321b of the first portion 321.

According to an embodiment, the eleventh adhesive member 833 may attach the deforming member 720 to the second portion 322. For example, the eleventh adhesive member 833 may be disposed (or interposed) between the deforming member 720 and the second portion 322. For example, the eleventh adhesive member 833 may be attached (or be in contact with) to the other surface 322b of the second portion 322. According to an embodiment, the ninth adhesive member 831 may be disconnected from the tenth adhesive member 832 and the eleventh adhesive member 833. For example, the ninth adhesive member 831 may be spaced apart from the tenth adhesive member 832 and the eleventh adhesive member 833.

As described above, according to an embodiment, the electronic device 200 may provide a structure capable of reducing damage to a display 310 due to an external force and/or an impact by the first reinforcing member 350 disposed to face the folding portion 313.

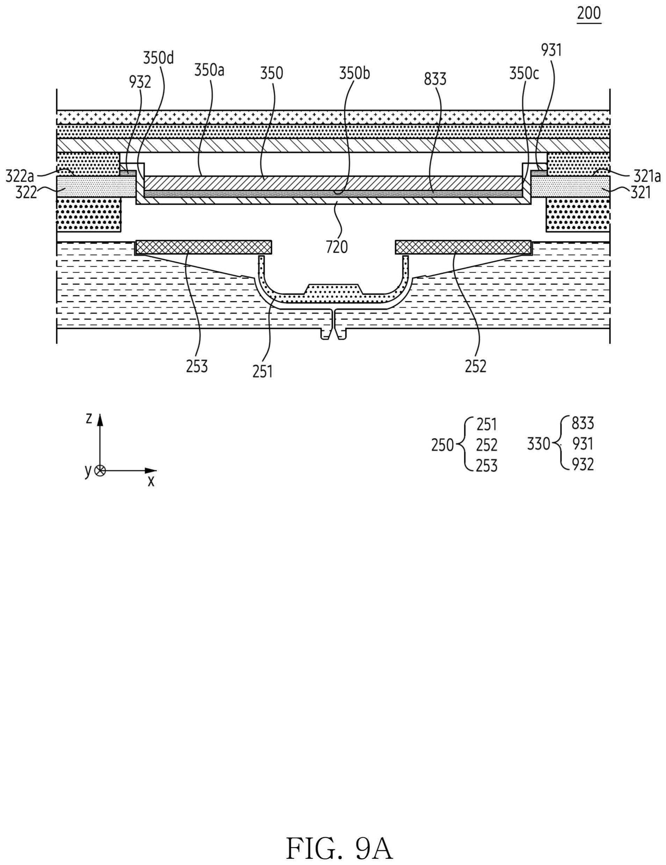

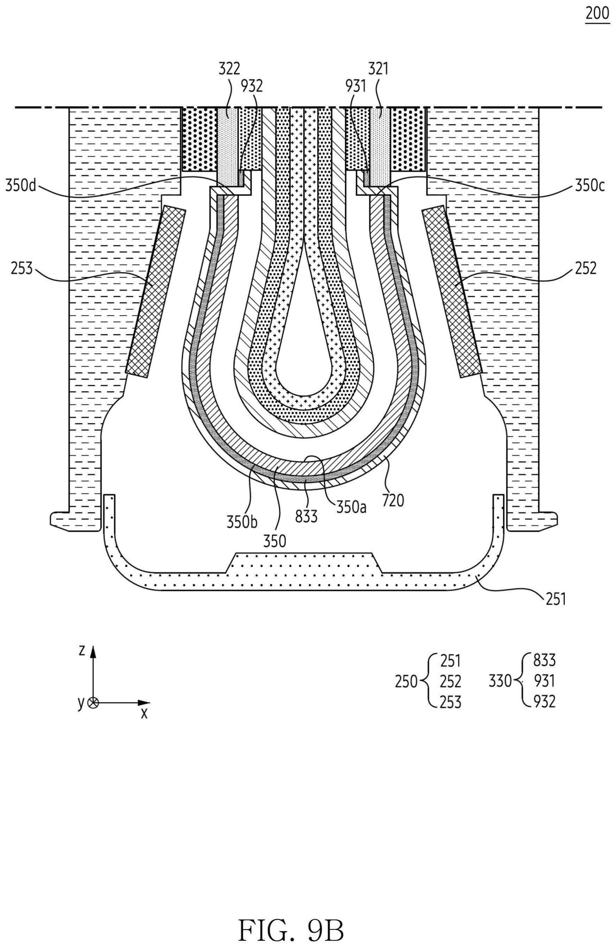

FIG. 9A is a cross-sectional view illustrating a case in which an exemplary electronic device is in an unfolding state according to an embodiment, and FIG. 9B is a cross-sectional view illustrating a case in which an exemplary electronic device is in a folding state according to an embodiment.

Since an electronic device 200 of FIGS. 9A and 9B may be the electronic device 200 in which a disposition relationship of a first reinforcing member 350 and a deforming member 720 is changed in the electronic device 200 of FIGS. 8A and 8B, a redundant description will be omitted.

Referring to FIGS. 9A and 9B, according to an embodiment, the electronic device 200 may include a hinge structure 250. The hinge structure 250 may include a hinge cover 251, a first hinge plate 252, and/or a second hinge plate 253.

According to an embodiment, the deforming member 720 may be attached to a first portion 321 and a second portion 322. For example, an end of the deforming member 720 may be disposed on a surface 321a of the first portion 321. For example, the end of the deforming member 720 may be attached to (or be in contact with) the surface 321a of the first portion 321. For example, another end of the deforming member 720 may be disposed on a surface 322a of the second portion 322. For example, the other end of the deforming member 720 may be attached to (be in contact with) the surface 322a of the second portion 322.

According to an embodiment, the deforming member 720 may surround (or cover) at least a portion of the first reinforcing member 350. For example, the deforming member 720 may cover (or surround) another surface 350b, a first lateral surface 350c, and/or a second lateral surface 350d of the first reinforcing member 350. For example, the deforming member 720 may not cover (or may not surround) a surface 350a of the first reinforcing member 350. The first lateral surface 350c of the first reinforcing member 350 may be disposed between the surface 350a of the first reinforcing member 350 and the other surface 350b of the first reinforcing member 350. For example, the first lateral surface 350c of the first reinforcing member 350 may connect the surface 350a of the first reinforcing member 350 and the other surface 350b of the first reinforcing member 350. The first lateral surface 350c of the first reinforcing member 350 may face toward the first portion 321 in an unfolding state of the electronic device 200. For example, a direction (e.g., a +x direction) toward which the first lateral surface 350c of the first reinforcing member 350 faces may be substantially perpendicular to a direction (e.g., a +z direction) toward which the surface 350a of the first reinforcing member 350 faces in the unfolding state of the electronic device 200. The second lateral surface 350d of the first reinforcing member 350 may be opposite to the first lateral surface 350c of the first reinforcing member 350. For example, a direction (e.g., a -x direction) toward which the second lateral surface 350d of the first reinforcing member 350 faces within the unfolding state of the electronic device 200 may be opposite to a direction (e.g., a +x direction) toward which the first lateral surface 350c of the first reinforcing member 350 faces. The second lateral surface 350d of the first reinforcing member 350 may face toward the second portion 322 in the unfolding state of the electronic device 200. The second lateral surface 350d of the first reinforcing member 350 may be disposed between the surface 350a of the first reinforcing member 350 and the other surface 350b of the first reinforcing member 350. For example, the second lateral surface 350d of the first reinforcing member 350 may connect the surface 350a of the first reinforcing member 350 and the other surface 350b of the first reinforcing member 350.

According to an embodiment, in the unfolding state of the electronic device 200, the deforming member 720 may have a shape extending from the surface 321a of the first portion 321 toward a gap between the first portion 321 and the first lateral surface 350c of the first reinforcing member 350. In the unfolding state of the electronic device 200, after passing through the gap between the first portion 321 and the first lateral surface 350c of the first reinforcing member 350, the deforming member 720 may have a shape extending toward a gap between the second portion 322 and the second lateral surface 350d of the first reinforcing member 350 by extending along the other surface 350b of the first reinforcing member 350. In the unfolding state of the electronic device 200, the deforming member 720 may extend to the surface 322a of the second portion 322 by passing through the gap between the second portion 322 and the second lateral surface 350d of the first reinforcing member 350.

According to an embodiment, within a folding state of the electronic device 200, the deforming member 720 may be spaced apart from the first lateral surface 350c and the second lateral surface 350d of the first reinforcing member 350. For example, within the folding state of the electronic device 200, the deforming member 720 may not cover the first lateral surface 350c and the second lateral surface 350d of the first reinforcing member 350.

According to an embodiment, a plurality of adhesive members 330 may further include a twelfth adhesive member 931 and a thirteenth adhesive member 932.

According to an embodiment, the twelfth adhesive member 931 may attach the deforming member 720 to the first portion 321. For example, the twelfth adhesive member 931 may be attached to the surface 321a of the first portion 321. For example, the twelfth adhesive member 931 may be disposed (or interposed) between the surface 321a of the first portion 321 and an end of the deforming member 720.

According to an embodiment, the thirteenth adhesive member 932 may attach the deforming member 720 to the second portion 322. For example, the thirteenth adhesive member 932 may be attached to the surface 322a of the second portion 322. For example, the thirteenth adhesive member 932 may be disposed (or interposed) between the surface 322a of the second portion 322 and another end of the deforming member 720.

According to an embodiment, an eleventh adhesive member 833 may be disconnected from the twelfth adhesive member 931 and the thirteenth adhesive member 932. For example, the eleventh adhesive member 833 may be spaced apart from the twelfth adhesive member 931 and the thirteenth adhesive member 932.

As described above, according to an embodiment, the electronic device 200 may provide a structure capable of reducing damage to a display 310 due to an external force and/or an impact by the first reinforcing member 350 disposed to face a folding portion 313.

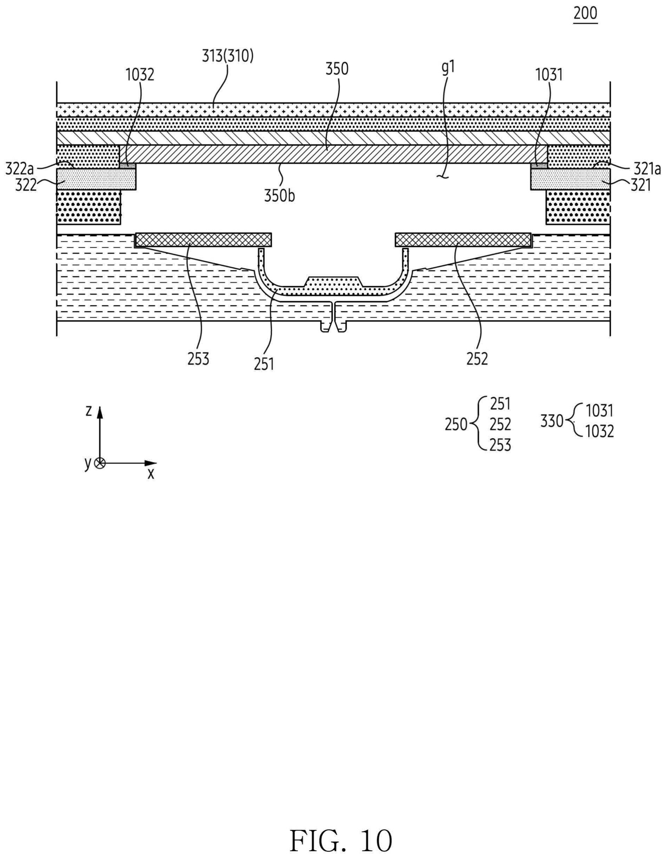

FIG. 10 is a cross-sectional view illustrating a case in which an exemplary electronic device is in an unfolding state according to an embodiment.

Since an electronic device 200 of FIG. 10 may be the electronic device 200 in which a disposition relationship of a first reinforcing member 350, a first portion 321, and a second portion 322 is changed in the electronic device 200 of FIGS. 8A and 8B, a redundant description will be omitted.

According to an embodiment, the electronic device 200 may include a hinge structure 250. The hinge structure 250 may include a hinge cover 251, a first hinge plate 252, and/or a second hinge plate 253.

According to an embodiment, the first reinforcing member 350 may be attached to the first portion 321 and the second portion 322. For example, the first reinforcing member 350 may be disposed on a gap g1 between the first portion 321 and the second portion 322. For example, the first reinforcing member 350 may be disposed outside the gap g1 between the first portion 321 and the second portion 322. For example, the first reinforcing member 350 may be supported by the first portion 321 and the second portion 322. For example, the first reinforcing member 350 may be disposed on a surface 321a of the first portion 321 and a surface 322a of the second portion 322. For example, the first reinforcing member 350 may be in contact with (or attached to) the surface 321a of the first portion 321 and the surface 322a of the second portion 322. The first reinforcing member 350 may be positioned with respect to a folding portion 313 by being positioned on the gap g1 between the first portion 321 and the second portion 322. Since the first reinforcing member 350 is positioned with respect to the folding portion 313, damage to a display 310 due to an external force and/or an impact may be reduced.

According to an embodiment, a plurality of adhesive members 330 may include a fourteenth adhesive member 1031, and a fifteenth adhesive member 1032.

According to an embodiment, the fourteenth adhesive member 1031 may attach the first reinforcing member 350 to the first portion 321. For example, the fourteenth adhesive member 1031 may be disposed on the surface 321a of the first portion 321. For example, the fourteenth adhesive member 1031 may be attached to (or be in contact with) the surface 321a of the first portion 321 and another surface 350b of the first reinforcing member 350.

According to an embodiment, the fifteenth adhesive member 1032 may attach the first reinforcing member 350 to the second portion 322. For example, the fifteenth adhesive member 1032 may be disposed on the surface 322a of the second portion 322. For example, the fifteenth adhesive member 1032 may be attached to (or be in contact with) the surface 322a of the second portion 322 and the other surface 350b of the first reinforcing member 350.

As described above, the electronic device 200 according to an embodiment may provide a structure capable of reducing damage to the display 310 due to the external force and/or the impact by the first reinforcing member 350 positioned with respect to the folding portion 313 by being attached on the first portion 321 and the second portion 322.

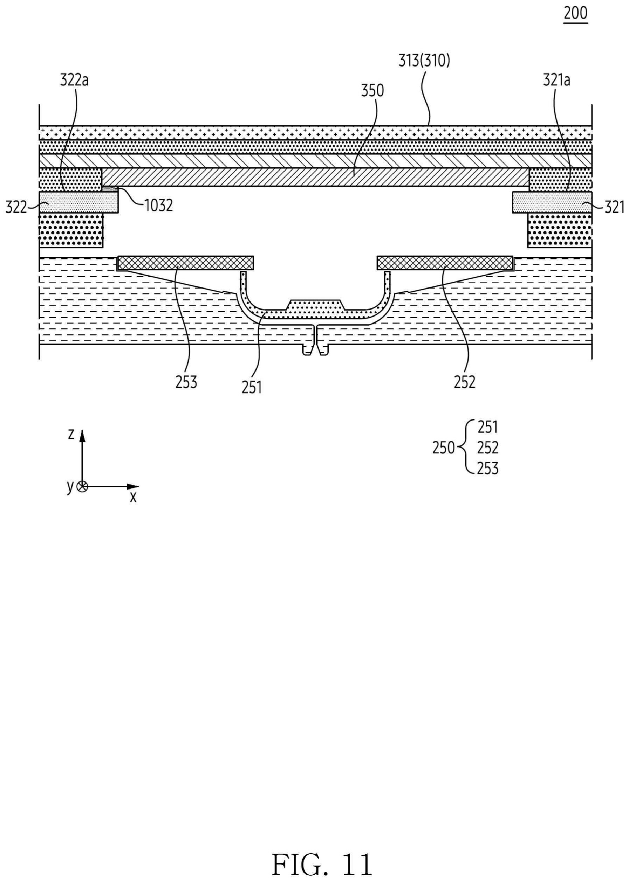

FIG. 11 is a cross-sectional view illustrating a case in which an exemplary electronic device is in an unfolding state according to an embodiment.

Since an electronic device 200 of FIG. 11 may be the electronic device 200 in which an attachment relationship between a first reinforcing member 350, and a first plate 320 is changed in the electronic device 200 of FIG. 10, a redundant description will be omitted.

Referring to FIG. 11, according to an embodiment, the electronic device 200 may include a hinge structure 250. The hinge structure 250 may include a hinge cover 251, a first hinge plate 252, and/or a second hinge plate 253.

According to an embodiment, the first reinforcing member 350 may be attached to at least one of a first portion 321 and a second portion 322. For example, the first reinforcing member 350 may be attached to the second portion 322. For example, the first reinforcing member 350 may be disposed on a surface 322a of the second portion 322. For example, the first reinforcing member 350 may be in contact with (or be attached to) the surface 322a of the second portion 321. According to an embodiment, the first reinforcing member 350 may be spaced apart from the first portion 321. For example, the first reinforcing member 350 may be faced away from a surface 321a of the first portion 321. However, it is not limited thereto. For example, the first reinforcing member 350 may be attached to the first portion 321 and spaced apart from the second portion 322.

As described above, according to an embodiment, the electronic device 200 may provide a structure capable of reducing damage to a display 310 due to an external force and/or an impact by the first reinforcing member 350 positioned with respect to a folding portion 313 by being attached to one of the first portion 321 and the second portion 322.

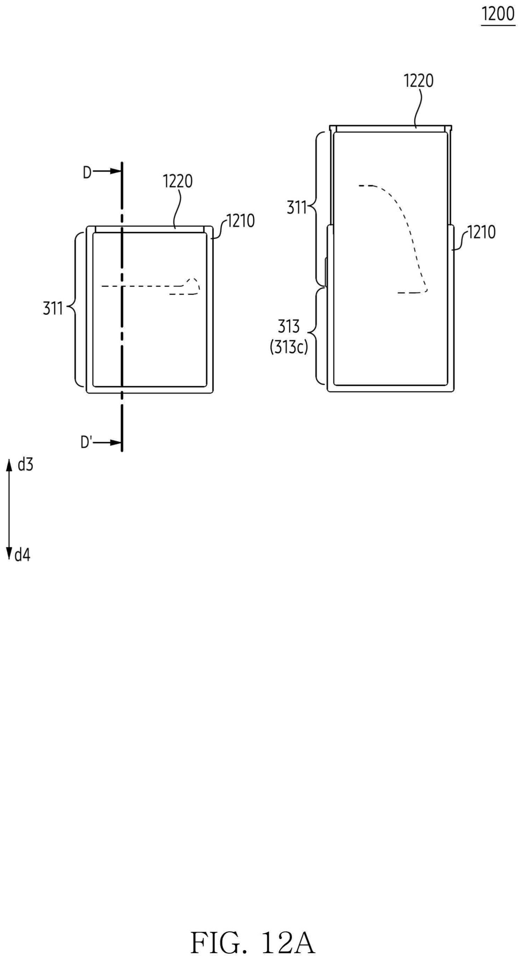

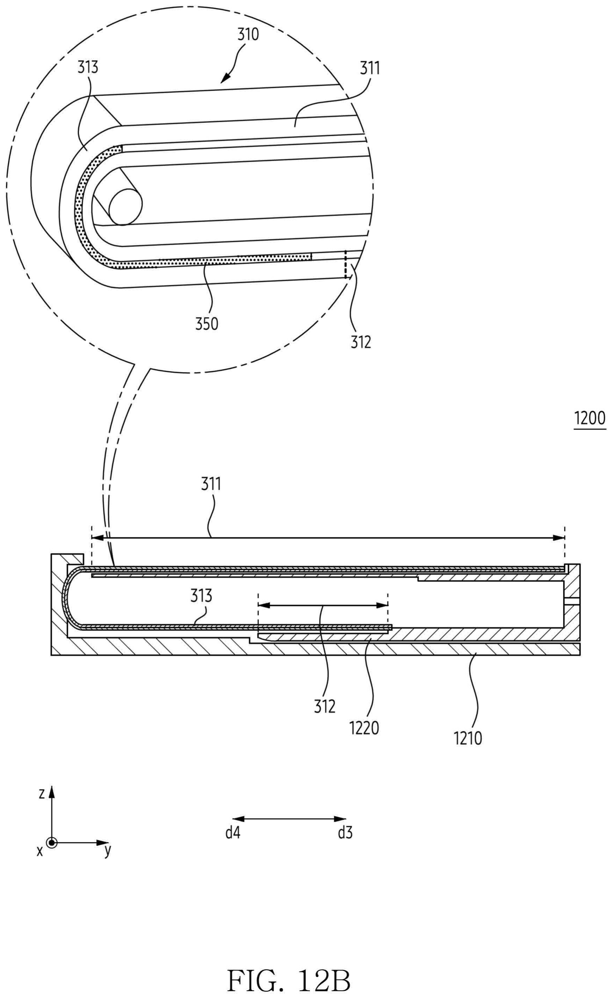

Meanwhile, in the above description, it was described that the first reinforcing member 350 is disposed in a foldable device in which the display 310 is foldable, but is not limited thereto. For example, the display 310 may be disposed on a multi-fold device that may be folded multiple times. For example, the display 310 may be disposed on a rollable device in which the display 310 is rolled into the device. An example of the rollable device may be described through FIGS. 12A and 12B.

FIG. 12A illustrates an exemplary electronic device according to an embodiment, and FIG. 12B is a cross-sectional view illustrating an example in which an exemplary electronic device is cut along line D-D' of FIG. 12A according to an embodiment.

Referring to FIGS. 12A and 12B, Referring to FIGS. 12A and 12B, an electronic device 1200 may include a display 310, a first reinforcing member 350, a first housing 1210, and/or a second housing 1220.

According to an embodiment, the first housing 1210 may accommodate at least a portion of the second housing 1220. The first housing 1210 may cover (or surround) the at least a portion of the second housing 1220.

According to an embodiment, the second housing 1220 may be movable with respect to the first housing 1210. The second housing 1220 may be linearly movable with respect to the first housing 1210. The second housing 1220 may be slidable with respect to the first housing 1210. For example, the second housing 1220 may be movable along a third direction d3 and/or a fourth direction d4 opposite to the third direction d3 with respect to the first housing 1210. As the second housing 1220 moves along the third direction d3, the second housing 1220 may slide to the outside of the first housing 1210. As the second housing 1220 moves in the fourth direction d4, the second housing 1220 may slide to the inside of the first housing 1210. A state of the electronic device 1200 may be changed by movement of the second housing 1220 with respect to the first housing 1210. The state of the electronic device 1200 may include a slide-in state and/or a slide-out state. In the slide-in state of the electronic device 1200, the second housing 1220 may be movable in the third direction d3 of the third direction d3 and the fourth direction d4 with respect to the first housing 1210. For example, in the slide-in state of the electronic device 1200, the second housing 1220 may be movable only in the third direction d3. In the slide-out state of the electronic device 1200, the second housing 1220 may be movable in the fourth direction d4 of the third direction d3 and the fourth direction d4 with respect to the first housing 1210. For example, in the slide-out state of the electronic device 1200, the second housing 1220 may be movable only in the fourth direction d4.

According to an embodiment, the display 310 may be disposed on the second housing 1220. The display 310 may be movable with respect to the first housing 1210 by the movement of the second housing 1220 with respect to the first housing 1210. For example, the display 310 may move from the inside of the first housing 1210 to the inside of the first housing 1210 by movement of the second housing 1220 in the third direction d3. For example, in the slide-out state of the electronic device 1200, a size of the electronic device 1200 exposed to the outside of the first housing 1210 may be maximum. For example, the display 310 may move from the outside of the first housing 1210 to the inside of the first housing 1210 by moving the second housing 1220 in the fourth direction d4. For example, the display 310 may be rolled into the inside of the first housing 1210 from the outside of the first housing 1210 by movement of the second housing 1220 in the fourth direction d4.

According to an embodiment, a first planar portion 311 may be disposed on the second housing 1220. A shape of the first planar portion 311 may be independently maintained of the movement of the second housing 1220 with respect to the first housing 1210. The first planar portion 311 may not be deformed by the movement of the second housing 1220 with respect to the first housing 1210. The first planar portion 311 may be exposed to the outside of the first housing 1210 independently of the movement of the second housing 1220 with respect to the first housing 1210.

According to an embodiment, a second planar portion 312 may be connected to the first planar portion 311 by a folding portion 313. The second planar portion 312 may be spaced apart from the first planar portion 311. The second planar portion 312 may be positioned (or accommodated) inside the first housing 1210 and the second housing 1220 in the slide-in state of the electronic device 1200. At least a portion of the second planar portion 312 may be positioned (or exposed) outside the first housing 1210 and the second housing 1220 in the slide-out state of the electronic device 1200.

According to an embodiment, the folding portion 313 may be disposed between the first planar portion 311 and the second planar portion 312. A shape of at least a portion of the folding portion 313 may be changed according to a change in the state of the electronic device 1200. For example, at least a portion 313c of the folding portion 313 may be extracted from the outside of the first housing 1210 by the movement of the second housing 1210 in the third direction d3 with respect to the first housing 1210. The at least a portion 313c of the folding portion 313 may have a shape substantially parallel to the first planar portion 311 by being extracted from the outside of the first housing 1210. For example, the at least a portion 313c of the folding portion 313 may be rolled into the inside of the first housing 1210 by the movement of the second housing 1210 in the fourth direction d3 with respect to the first housing 1210. The at least a portion 313c of the folding portion 313 may have a shape bent with respect to the first planar portion 311 by being rolled into the first housing 1210.

According to an embodiment, in the slide-in state of the electronic device 1200, a size of a display area of the display 310 that may be visible from the outside may be minimum. For example, only the first planar portion 311 may be exposed in the slide-in state of the electronic device 1200. A position of the second housing 1220 with respect to the first housing 1210 while the state of the electronic device 1200 is in the slide-in state may be referred to as a reduced position. In the slide-out state of the electronic device 1200, a size of the display area of the display 310 that may be visible from the outside may be maximum. For example, in the slide-out state of the electronic device 1200, at least a portion of the first planar portion 311, the folding portion 313, and the second planar portion 312 may be exposed. However, it is not limited thereto. For example, in the slide-out state of the electronic device 1200, the second planar portion 312 may not be exposed to the outside of the first housing 1210. A position of the second housing 1220 with respect to the first housing 1210 while the state of the electronic device 1200 is in the slide-out state may be referred to as an expansion position.

According to an embodiment, the first reinforcing member 350 may be positioned with respect to the folding portion 313. The first reinforcing member 350 may be disposed along the folding 313. For example, the first reinforcing member 350 may be disposed inside the first housing 1210 in the slide-in state of the electronic device 1200. For example, at least a portion of the first reinforcing member 350 may be disposed outside the first housing 1210 in the slide-out state of the electronic device 1200.

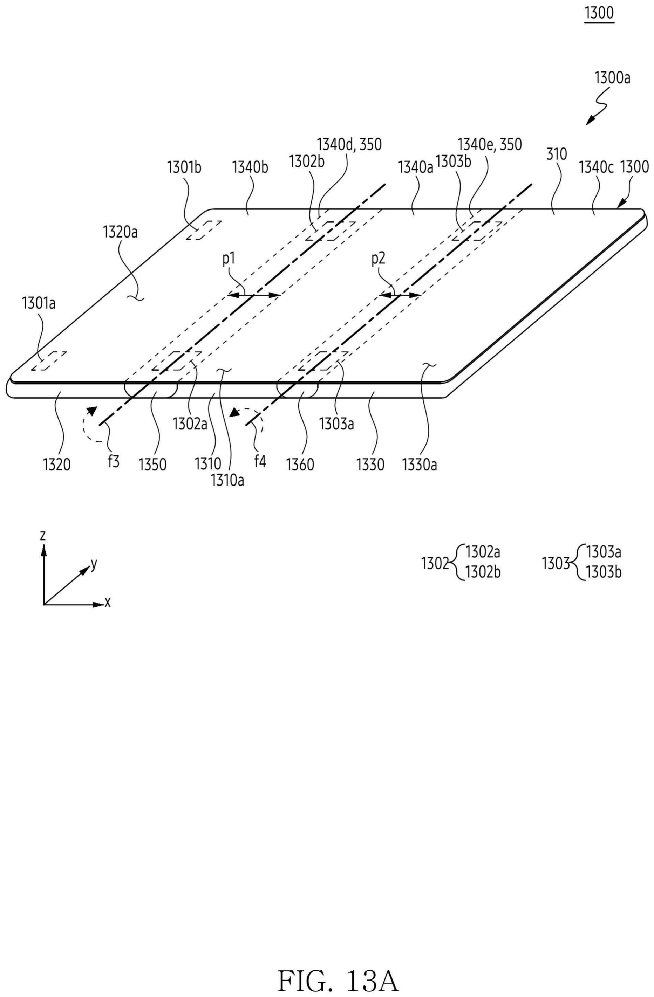

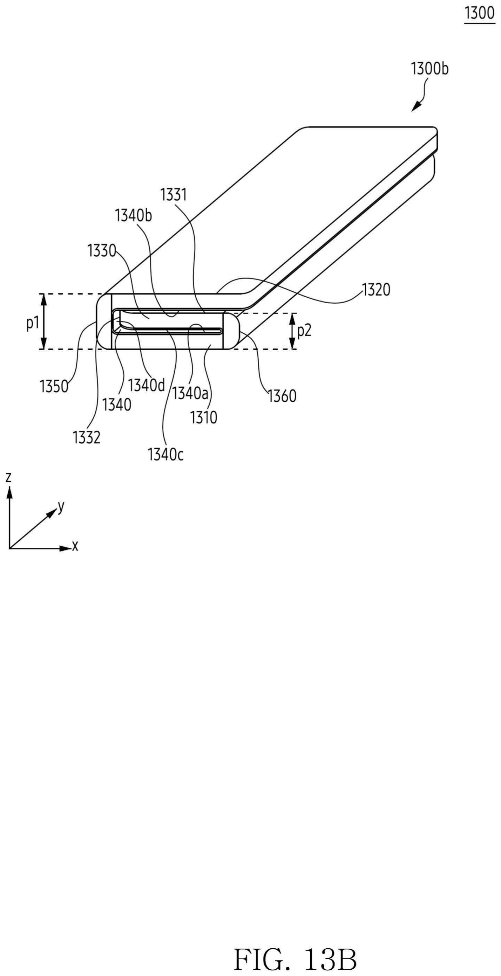

FIG. 13A illustrates an example of an unfolding state of an electronic device according to an embodiment. FIG. 13B illustrates an example of a fully folding state of an electronic device according to an embodiment.

Referring to FIG. 13A, an electronic device 1300 may be unfolded in a first state 1301a. The electronic device 1300 may include a first housing 1310, a second housing 1320, and a third housing 1330. The first housing 1310 may include a first surface 1310a. The second housing 1320 may include a second surface 1320a. The third housing 1330 may include a third surface 1330a. The first state 1301a may be a state in which the first surface 1310a, the second surface 1320a, and the third surface 1330a face toward substantially the same first direction (e.g., a z-axis direction). The first state 1301a, which is a state in which the first housing 1310, the second housing 1320, and the third housing 1330 are unfolded, may be referred to as an unfolding state. In the first state 1301a, the first housing 1310, the second housing 1320, and the third housing 1330 may form a substantially planar surface. For example, since the first housing 1310, the second housing 1320, and the third housing 1330 substantially include the planar surface, the first surface 1310a, the second surface 1320a, and the third surface 1330a may form a planar surface.

The electronic device 1300 may include a first hinge structure 1302 (1302a or 1302b) and a second hinge structure 1303 (1303a or 1303b). The first hinge structure 1302 may include a plurality of first hinge structures 1302a and 1302b. The second hinge structure 1303 may include a plurality of second hinge structures 1303a and 1303b. The first hinge structures 1302a and 1302b may be disposed between the first housing 1310 and the second housing 1320. The first hinge structures 1302a and 1302b may rotatably connect the second housing 1320 with respect to the first housing 1310. For example, through the first hinge structures 1302a and 1302b, the second housing 1320 may rotate with respect to the first housing 1310 based on a first folding axis f3. Through rotation of the second housing 1320, a first angle Θ1 between the first housing 1310 and the second housing 1320 may be approximately 0° to 180°. The second hinge structures 1303a and 1303b may be disposed between the first housing 1310 and the third housing 1330. The second hinge structures 1303a and 1303b may rotatably connect the third housing 1330 with respect to the first housing 1310. For example, through the second hinge structures 1303a and 1303b, the third housing 1330 may rotate with respect to the first housing 1310 based on a second folding axis f4. Through rotation of the third housing 1330, a first angle Θ1 between the first housing 1310 and the third housing 1330 may be approximately 0° to 180°.

The first hinge structures 1302a and 1302b may be surrounded by a first hinge cover 1350. One 1302a of the first hinge structures 1302a and 1302b may be disposed at an end of the first hinge cover 1350, and another one 1302b may be disposed at another end of the first hinge cover 1350. The second hinge structures 1303a and 1303b may be covered by a second hinge cover 1360. One 1303a of the second hinge structures 1303a and 1303b may be disposed at an end of the second hinge cover 1360, and another one 1303b may be disposed at another end of the second hinge cover 1360.

The electronic device 1300 may further include a display 310. The display 310 may be disposed on a surface formed by the first housing 1310, the second housing 1320, and the third housing 1330. The display 310 may be disposed on the first surface 1310a, the second surface 1320a, and the third surface 1330a. The display 310 may include a first display area 1340a, a second display area 1340b, and a third display area 1340c. The first display area 1340a may be disposed on the first surface 1310a of the first housing 1310. The first display area 1340a may be an area that is not deformed by being coupled to the first surface 1310a. The second display area 1340b may be disposed on the second surface 1320a of the second housing 1320. The second display area 1340b may be an area that is not deformed by being coupled to the second surface 1320a. The third display area 1340c may be disposed on the third surface 1330a of the third housing 1330. The third display area 1340c may be an area that is not deformed by being coupled to the third surface 1330a. The first display area 1340a, the second display area 1340b, and the third display area 1340c may be referred to as a planar area in terms of substantially forming a planar surface.

The display 310 may further include a fourth display area 1340d and a fifth display area 1340e. The fourth display area 1340d may be disposed on the first hinge cover 1350. The fourth display area 1340d may be coupled to the first hinge cover 1350 or the first hinge structures 1302a and 1302b. For example, the fourth display area 1340d may be supported by a hinge plate (not illustrated) included in the first hinge structures 1302a and 1302b. As the second housing 1320 rotates based on the first folding axis f3 with respect to the first housing 1310, the fourth display area 1340d may be deformed.

The fifth display area 1340e may be disposed on the second hinge cover 1360. The fifth display area 1340e may be coupled to the second hinge cover 1360 or the second hinge structures 1303a and 1303b. For example, the fifth display area 1340e may be supported by a hinge plate (not illustrated) included in the second hinge structures 1303a and 1303b. As the third housing 1330 rotates based on the second folding axis f4 with respect to the first housing 1310, the fifth display area 1340e may be deformed.

The fourth display area 1340d may be larger than extent of the fifth display area 1340e. For example, a first distance p1, which is a width of the fourth display area 1340d, may be longer than a second distance p2, which is a width of the fifth display area 1340e. When the electronic device 1300 is converted into a folding state, a radius of curvature of the fourth display area 1340d may be greater than a radius of curvature of the fifth display area 1340e.

The electronic device 1300 may further include first magnets 1301a and 201b. The first magnets 1310a and 1310b may be disposed in the second housing 1320. For example, the first magnets 1310a may be disposed on a lateral surface of the second housing 1320. The first magnets 1310a may be disposed closer to another lateral surface facing a lateral surface than the lateral surface of the second housing 1320 facing toward the first hinge cover 1350. The first magnets 1310a may at least partially overlap an inactive area disposed along a periphery of the second display area 1340b, when the display 310 is viewed from above. The first magnets 1301a and 201b may be disposed to face the second hinge structures 1303a and 1303b when the second housing 1320 rotates and folds along the first folding axis f3.

Referring to FIG. 13B, the electronic device 1300 may be folded in a second state 1301b. The second state 1301b may be a state in which at least one of the first surface 1310a, the second surface 1320a, and the third surface 1330a faces toward a different direction. The third display area 1340c corresponding to the third surface 1330a may face toward substantially the same direction as a direction (e.g., a -z-axis direction) toward which the second display area 1340b corresponding to the second surface 1320a faces. The third display area 1340c may face a direction different from a direction toward which the first display area 1340a corresponding to the first surface 1310a faces. For example, a direction (e.g., a -z-axis direction) toward which the third display area 1340c faces may be a direction opposite to a direction (e.g., a +z-axis direction) toward which the first display area 1340a faces. The third display area 1340c may face the first display area 1340a. The second state 1301b may be referred to as a folding state in that the first housing 1310, the second housing 1320, and the third housing 1330 are in a folding state. In the second state 1301b, the first housing 1310, the second housing 1320, and the third housing 1330 may face each other. For example, in the second state 1301b, the first housing 1310, the third housing 1330, and the second housing 1320 may be stacked in the first direction (e.g., the z-axis direction).

The second housing 1320 may rotate based on the first folding axis f3 with respect to the first housing 1310 through the first hinge structure 1302 while changing from the first state 1301a to the second state 1301b. In the second state 1301b, the second housing 1320 may face the third housing 1330. For example, in the second state 1301b, the second display area 1340b disposed in the second housing 1320 may face a rear surface 1331 of the third housing 1330.

The third housing 1330 may rotate based on the second folding axis f4 with respect to the first housing 1310 through the first hinge structure 1303. In the second state 1301b, the third housing 1330 may face the first housing 1310. For example, in the second state 1301b, the third display area 1340c disposed in the third housing 1330 may face the first display area 1340a disposed in the first housing 1310. The third lateral surface 1332 of the third housing 1330 may face the fourth display area 1340d.

Overlapping extent between the display 310 and the first hinge structure 1302 when the first hinge cover 1350 is viewed from above in the second state 1301b may be wider than overlapping extent between the display 310 and the second hinge structure 1303 when the second hinge cover 1360 is viewed from above. A first distance p1, which is a width of the first hinge cover 1350 corresponding to the fourth display area 1340d, may be longer than a second distance p2, which is a width of the second hinge cover 1360 corresponding to the fifth display area 1340e (e.g., the fifth display area 1340e of FIG. 11a). A difference between the first distance p1 and the second distance p2 may correspond to a thickness of the second housing 1320.

Based on the difference between the first distance pl and the second distance p2, a first foldable housing among the second housing 1320 and the third housing 1330 may be determined. For example, the third housing 1330 may first rotate based on the second folding axis f4 with respect to the first housing 1310. After the third housing 1330 is folded, the second housing 1320 may rotate based on the first folding axis f3 with respect to the first housing 1310. As a width of the second hinge structure 1303 is narrower than a width of the first hinge structure 1302, the third housing 1330 may be folded to face the first housing 1310. For example, as the width of the first hinge cover 1350 is wider than the width of the second hinge cover 1360, the third housing 1330 may be folded to face the first housing 1310 based on an operation of the second hinge structure 1303 in the second hinge cover 1360. As the width of the first hinge structure 1302 is wider than the width of the second hinge structure 1303, the second housing 1320 may be folded to face the rear surface 1331 of the third housing 1330. For example, as the width of the first hinge cover 1350 is wider than the width of the second hinge cover 1360, the second housing 1330 may be folded to face the rear surface 1331 of the third housing 1330 based on an operation of the first hinge structure 1302 in the first hinge cover 1350.

According to an embodiment, a first reinforcing member 350 may be aligned with at least one of the first hinge structure 1302 and the second hinge structure 1303. The first reinforcing member 350 may face at least one of the first hinge structure 1302 and the second hinge structure 1303. For example, the first reinforcing member 350 may include a plurality of first reinforcing members aligned with the first hinge structure 1302 and the second hinge structure 1303. For example, the first reinforcing member 350 may include a plurality of first reinforcing members aligned with the fourth display area 1340d and the fifth display area 1340e.

According to the above-described embodiment, the electronic device 1300 may provide the display 310 that may be folded at least once by including the plurality of hinge structures 1302 and 1303. Through widths of the different hinge structures 1302 and 1303, the display 310 may be folded several times.

An electronic device may include a plate for protecting a display. The plate supporting the display may include a structure for reducing damage due to stress. When an external force or an impact is transmitted to a portion of the plate by a rigidity of a portion of the plate being reduced due to the structure, damage to the display may occur. The electronic device may need a structure for reducing damage to the display.

An electronic device (e.g., the electronic device 200 of FIGS. 3A, 3B, and 3C) is provided. According to an embodiment, the electronic device may comprise a display (e.g., the display 310 of FIGS. 3A, 3B, and 3C) including a first planar portion (e.g., the first planar portion 311 of FIGS. 3A, 3B, and 3C), a second planar portion (e.g., the second planar portion 312 of FIGS. 3A, 3B, and 3C) spaced apart from the first planar portion, and a folding portion (e.g., the folding portion 313 of FIGS. 3A, 3B, and 3C) connecting the first planar portion to the second planar portion and deformable. According to an embodiment, the electronic device may comprise a plate (e.g., the first plate 320 of FIGS. 3A, 3B, and 3C) supporting the display and including a first portion (e.g., the first portion 321 of FIGS. 3A, 3B, and 3C) attached to the first planar portion and a second portion (e.g., the second portion 322 of FIGS. 3A, 3B, and 3C) spaced apart from the first portion and attached to the second planar portion. According to an embodiment, the electronic device may comprise a plurality of adhesive members including a first adhesive member (e.g., the first adhesive member 331 of FIGS. 3B and 3C) interposed between the first planar portion and the first portion, a second adhesive member (e.g., the second adhesive member 332 of FIGS. 3B and 3C) interposed between the second planar portion and the second portion, and a third adhesive member (e.g., the third adhesive member 333 of FIGS. 3B and 3C) disconnected from the first adhesive member and the second adhesive member and disposed between the first adhesive member and the second adhesive member. According to an embodiment, the electronic device may comprise a first reinforcing member (e.g., the first reinforcing member 350 of FIGS. 3B and 3C) attached to the folding portion by the third adhesive member to reduce an impact transmitted to the folding portion and having a higher rigidity than a rigidity of each of the plurality of adhesive members.

According to an embodiment, the electronic device may provide a structure capable of reducing damage to the display by the first reinforcing member disposed between the folding portion and a third portion relatively vulnerable to an impact.

According to an embodiment, the plate further may include a third portion (e.g., the third portion 323 of FIGS. 3B and 3C) disposed between the first portion and the second portion to connect the first portion to the second portion and deformable according to a deformation of the display. According to an embodiment, the first reinforcing member may be disposed between the third portion and the third adhesive member.

According to an embodiment, the electronic device may provide a structure capable of reducing damage to the display by the first reinforcing member disposed over the third portion relatively vulnerable to an impact.

According to an embodiment, the third portion may include a plurality of openings (e.g., the plurality of openings 323a of FIGS 3B and 3C) penetrating the third portion.

According to an embodiment, the electronic device may provide a structure capable of reducing damage to the display by the first reinforcing member disposed over the third portion relatively vulnerable to an impact by the plurality of openings.

According to an embodiment, a thickness of the third portion may be thinner than a thickness of the first portion and a thickness of a second portion.

According to an embodiment, since the thickness of the third portion disposed under a first reinforcing member is thinner than the thicknesses of the first portion and the second portion, the electronic device may have a thin thickness.

According to an embodiment, a thickness of the third adhesive member may be thinner than a thickness of the first adhesive member and a thickness of the second adhesive member.

According to an embodiment, since the thickness of the third adhesive member disposed over the first reinforcing member is thinner than the thicknesses of the first adhesive member and the second adhesive member, the electronic device may have a thin thickness.

According to an embodiment, the electronic device may include a barrier (e.g., the protective layer 340 of FIGS. 3B and 3C) interposed between the plurality of adhesive members and the display.

According to an embodiment, the electronic device may stably provide visual content to a user by the barrier for removing a step between layers in the display.

According to an embodiment, the plurality of adhesive members may include a fourth adhesive member (e.g., the fourth adhesive member 334 of FIGS. 3B and 3C) attaching the barrier to the display by being interposed between the barrier and the display.

According to an embodiment, the electronic device may stably provide visual content to the user by the barrier attached under the display.

According to an embodiment, the third adhesive member may be in contact with a surface of the first reinforcing member, and the electronic device may further include a deforming member (e.g., the deforming member 720 of FIG. 7) disposed on another surface of the first reinforcing member opposite to the surface of the first reinforcing member.

According to an embodiment, the electronic device may provide a structure capable of reducing inflow of a foreign substance into the display by the deforming member disposed under the first reinforcing member.

According to an embodiment, a thickness of the deforming member may be thicker than a thickness of the first reinforcing member.

According to an embodiment, a state of the display may include an unfolding state in which a direction toward which a surface of the first planar portion faces is the same as a direction toward which the surface of the second planar portion faces and a folding state in which the direction toward which the surface of the first planar portion faces is opposite to the direction toward which the surface of the second planar portion faces. According to an embodiment, a shape of each of the first planar portion and the second planar portion may be maintained within the folding state and the unfolding state.

According to an embodiment, in the unfolding state, a gap may be disposed between the first adhesive member and the third adhesive member.

According to an embodiment, since the third adhesive member is disconnected from the first adhesive member, the electronic device may provide a structure capable of reducing damage to the first adhesive member and the third adhesive member due to repeated changes in a state of the electronic device.

According to an embodiment, the plate may include a third portion (e.g., the third portion 323 of FIGS. 3A, 3B, and 3C) disposed between the first portion and the second portion to connect the first portion to the second portion and deformable according to a deformation of the display. According to an embodiment, the plate may include a fourth portion (e.g., the fourth portion 324 of FIG. 5) attached on the first portion. According to an embodiment, the plate may include a fifth portion (e.g., the fifth portion 325 of FIG. 5) attached on the second portion. According to an embodiment, a thickness of the first reinforcing member may be thicker than or equal to a thickness of each of the fourth portion and the fifth portion.

According to an embodiment, the plurality of adhesive members may include a fifth adhesive member (e.g., the fifth adhesive member 531 of FIG. 5) disposed between the first portion and the fourth portion. According to an embodiment, the plurality of adhesive members may include a sixth adhesive member (e.g., the sixth adhesive member 532 of FIG. 5) disposed between the second portion and the fifth portion and disconnected from the fifth adhesive member.

According to an embodiment, the electronic device may comprise a second reinforcing member (e.g., the second reinforcing member 360 of FIGS. 6A, 6B, and 6C) interposed between the first planar portion and the first portion. According to an embodiment, the electronic device may comprise a third reinforcing member (e.g., the third reinforcing member 370 of FIGS. 6A, 6B, and 6C) interposed between the second planar portion and the second portion. According to an embodiment, the first reinforcing member may be disconnected from the second reinforcing member and the third reinforcing member.

According to an embodiment, the plurality of adhesive members may include a seventh adhesive member (e.g., the seventh adhesive member 631 of FIGS. 6B and 6C) attaching the second reinforcing member to the first portion by being interposed between the second reinforcing member and the display. According to an embodiment, the plurality of adhesive members may include an eighth adhesive member (e.g., the eighth adhesive member 632 of FIGS. 6B and 6C) attaching the third reinforcing member to the second portion by being interposed between the third reinforcing member and the display.

An electronic device (e.g., the electronic device 200 of FIGS. 3A, 3B, and 3C) is provided. According to an embodiment, the electronic device may comprise a display (e.g., the display 310 of FIGS. 3A, 3B, and 3C) including a first planar portion (e.g., the first planar portion 311 of FIGS. 3A, 3B, and 3C), a second planar portion (e.g., the second planar portion 312 of FIGS. 3A, 3B, and 3C) spaced apart from the first planar portion, and a folding portion (e.g., the folding portion 313 of FIGS. 3A, 3B, and 3C) connecting the first planar portion to the second planar portion and deformable. According to an embodiment, the electronic device may comprise a plate (e.g., the first plate 320 of FIGS. 3A, 3B, and 3C) supporting the display and including a first portion (e.g., the first portion 321 of FIGS. 3A, 3B, and 3C) attached to the first planar portion and a second portion (e.g., the second portion 322 of FIGS. 3A, 3B, and 3C) disconnected from the first portion and attached to the second planar portion. According to an embodiment, the electronic device may comprise a plurality of adhesive members including a first adhesive member (e.g., the first adhesive member 331 of FIGS. 3B and 3C) interposed between the first planar portion and the first portion, and a second adhesive member (e.g., the second adhesive member 332 of FIGS. 3B and 3C) interposed between the second planar portion and the second portion. According to an embodiment, the electronic device may comprise a first reinforcing member (e.g., the first reinforcing member 350 of FIG. 7) supporting the folding portion to reduce an impact transmitted to the folding portion, attached to at least one of the first portion and the second portion, and spaced apart from the first adhesive member and the second adhesive member.

According to an embodiment, the electronic device may provide a structure capable of reducing damage to the display by the first reinforcing member disposed between the folding portion and a third portion relatively vulnerable to an impact.

According to an embodiment, the first reinforcing member may be disposed between the first portion and the second portion.

According to an embodiment, the electronic device may provide a structure capable of reducing damage to the display by the first reinforcing member disposed between the first portion and the second portion.

According to an embodiment, the electronic device may further include a surface of the first reinforcing member facing a second direction opposite to a first direction facing the display, and a deforming member (e.g., the deforming member 720 of FIGS. 8A and 8B) attached to the first portion, and the second portion.

According to an embodiment, the electronic device may provide a structure capable of reducing damage to the display by the first reinforcing member supported by the deforming member.

According to an embodiment, an end of the deforming member may be attached to a surface of the first portion facing the display. According to an embodiment, another end of the deforming member may be attached to a surface of the second portion facing the display.

According to an embodiment, the end of the deforming member may be attached to the surface of the first portion facing the second direction. According to an embodiment, the other end of the deforming member may be attached to the surface of the second portion facing the second direction.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200) comprising:
a display (230; 310) including a first planar portion (311), a second planar portion (312) spaced apart from the first planar portion (311), and a folding portion (313) connecting the first planar portion (311) to the second planar portion (312) and foldable based on a folding axis (f);
a plate (320) supporting the display (230; 310) and including a first portion (321) attached to the first planar portion (311) and a second portion (322) spaced apart from the first portion (321) and attached to the second planar portion (312);
a plurality of adhesive members (330) including a first adhesive member (331) interposed between the first planar portion (311) and the first portion (321), a second adhesive member (332) interposed between the second planar portion (312) and the second portion (322), and a third adhesive member (333) disconnected from the first adhesive member (331) and the second adhesive member (332) and disposed between the first adhesive member (331) and the second adhesive member (332); and
a first reinforcing member (350) attached to the folding portion (313) by the third adhesive member (333) to reduce an impact transmitted to the folding portion (313) and having a higher rigidity than a rigidity of each of the plurality of adhesive members (330).

2. The electronic device (101; 200) of claim 1,
wherein the plate (320) further includes a third portion (323) disposed between the first portion (321) and the second portion (322) to connect the first portion (321) to the second portion (322) and deformable according to a deformation of the display (230; 310); and
wherein the first reinforcing member (350) is disposed between the third portion (323) and the third adhesive member (333).

3. The electronic device (101; 200) of claim 2,
wherein the third portion (323) includes a plurality of openings (323a) penetrating the third portion (323).

4. The electronic device (101; 200) of claim 2,
wherein a thickness of the third portion (323) is thinner than a thickness of the first portion (321) and a thickness of the second portion (322).

5. The electronic device (101; 200) of claim according to any one claims 1 to 4,
wherein a thickness of the third adhesive member (333) is thinner than a thickness of the first adhesive member (331) and a thickness of the second adhesive member (332).

6. The electronic device (101; 200) of claim according to any one claims 1 to 5, further including a protective layer (340) interposed between the plurality of adhesive members (330) and the display (230; 310).

7. The electronic device (101; 200) of claim 6,
wherein the plurality of adhesive members (330) further includes a fourth adhesive member (334) attaching the protective layer (340) to the display (230; 310) by being interposed between the protective layer (340) and the display (230; 310).

8. The electronic device (101; 200) of claim according to any one claims 1 to 7,
wherein the third adhesive member (333) is in contact with a surface of the first reinforcing member (350), and
wherein the electronic device (101; 200) further includes a deforming member (720) disposed on another surface of the first reinforcing member (350) opposite to the surface of the first reinforcing member (350).

9. The electronic device (101; 200) of claim 8,
wherein a thickness of the deforming member (720) is thicker than a thickness of the first reinforcing member (350).

10. The electronic device (101; 200) of claim according to any one claims 1 to 9,
wherein a state of the display (230; 310) includes an unfolding state in which a direction toward which a surface of the first planar portion (311) faces is the same as a direction toward which the surface of the second planar portion (312) faces and a folding state in which the direction toward which the surface of the first planar portion faces is opposite to the direction toward which the surface of the second planar portion (312) faces, and
wherein a shape of each of the first planar portion (311) and the second planar portion (312) is maintained within the folding state and the unfolding state.

11. The electronic device (101; 200) of claim 10,
wherein in the unfolding state, a gap is disposed between the first adhesive member (331) and the third adhesive member (333).

12. The electronic device (101; 200) of claim according to any one claims 1 to 11,
wherein the plate (320) further includes:
a third portion (323) disposed between the first portion (321) and the second portion (322) to connect the first portion (321) to the second portion (322) and deformable according to a deformation of the display (230; 310);
a fourth portion (324) attached on the first portion (321); and
a fifth portion (325) attached on the second portion (322), and
wherein a thickness of the first reinforcing member (350) is thicker than or equal to a thickness of each of the fourth portion (324) and the fifth portion (325).

13. The electronic device (101; 200) of claim 12,
wherein the plurality of adhesive members (330) further includes:
a fifth adhesive member (335) disposed between the first portion (321) and the fourth portion (324); and
a sixth adhesive member (336) disposed between the second portion (322) and the fifth portion (325) and disconnected from the fifth adhesive member (335).

14. The electronic device (101; 200) of claim according to any one claims 1 to 13, further comprising:
a second reinforcing member interposed between the first planar portion (311) and the first portion (321); and
a third reinforcing member interposed between the second planar portion (312) and the second portion (322), and
wherein the first reinforcing member (350) is disconnected from the second reinforcing member and the third reinforcing member.

15. The electronic device (101; 200) of claim 14,
wherein the plurality of adhesive members (330) further includes:
a seventh adhesive member (337) attaching the second reinforcing member to the first portion (321) by being interposed between the second reinforcing member and the display (230; 310); and
an eighth adhesive member (338) attaching the third reinforcing member to the second portion (322) by being interposed between the third reinforcing member and the display (230; 310).
